# EUROPEAN PATENT SPECIFICATION

(11) **EP 4 465 475 B1**
(45) Date of publication and mention of the grant of the patent: **29.04.2026**
(21) Application number: 23853988.6
(22) Date of filing: 18.05.2023
(51) Int. Cl.: H02J 7/00, H02J 7/34

(54) **REVERSE CHARGING SYSTEM AND METHOD, AND RELATED APPARATUS**
SYSTEM UND VERFAHREN ZUM UMGEKEHRTEN LADEN UND ZUGEHÖRIGE VORRICHTUNG
SYSTÈME ET PROCÉDÉ DE CHARGE INVERSE, ET APPAREIL ASSOCIÉ

(30) Priority: 16.08.2022 CN 202210983509
(43) Date of publication of application: 20.11.2024
(73) Proprietor: Honor Device Co., Ltd., Shenzhen, Guangdong 518040 (CN)
(72) Inventor: HAN, Zhehao, Shenzhen, Guangdong 518040 (CN); SUN, Ni, Shenzhen, Guangdong 518040 (CN)
(74) Representative: MERH-IP Matias Erny Reichl Hoffmann Patentanwälte PartG mbB
(86) International application number: PCT/CN2023/095148
(87) International publication number: WO 2024/037081

(56) References cited:
- WO-A1-2022/117052
- CN-A- 105 790 349
- CN-A- 105 790 349
- CN-A- 106 340 937
- CN-A- 112 928 787
- CN-A- 113 162 131
- CN-A- 114 597 983
- CN-A- 114 678 908
- CN-U- 211 018 337
- JP-A- H08 149 704

## Description

This application claims priority to Chinese Patent Application No. 202210983509.7, filed with the China National Intellectual Property Administration on August 16, 2022 and entitled "REVERSE CHARGING SYSTEM AND METHOD, AND RELATED APPARATUS".

### TECHNICAL FIELD

This application relates to the field of terminal technologies, and in particular, to a reverse charging system and method, and a related apparatus.

### BACKGROUND

A battery electricity quantity gradually decreases in a process of using an electronic device. When the electricity quantity of the electronic device is relatively low, the electronic device is powered off, which causes inconvenience to a user.

Currently, another electronic device may be used to charge an electronic device with a relatively low electricity quantity. For example, a mobile phone with a relatively high electricity quantity is used to wirelessly charge a mobile phone with a relatively low electricity quantity. Specifically, a mobile phone A with a high electricity quantity is used to perform wireless reverse charging for a mobile phone B with a low electricity quantity. In a wireless reverse charging process, the mobile phone A radiates a wireless charging signal based on a voltage obtained after the mobile phone A boosts its voltage, and the mobile phone B converts a received wireless charging signal into a voltage, and charges a battery of the mobile phone B by using the converted voltage. The mobile phone B bucks a received boosted voltage, and further charges the battery of the mobile phone B by using the bucked voltage.

However, reverse charging efficiency of the electronic device is relatively low.
Document CN 114678908 A relates to a voltage conversion circuit. The voltage conversion circuit comprises a target interface, a battery, an energy storage circuit, a first control assembly and a second control assembly. Wherein the target interface is used for connecting target equipment, the first end of the energy storage circuit is electrically connected with the positive electrode of the battery, the first control assembly is electrically connected with the second end of the energy storage circuit and the negative electrode of the battery, and the second control assembly is electrically connected with the second end of the energy storage circuit and the target interface. And the battery performs high-power charging on the target equipment connected with the target interface.

### SUMMARY

Embodiments of this application provide a reverse charging system and method, and a related apparatus, improving reverse charging efficiency. The present invention is defined by the appended claims. In the following, parts of the description and drawings referring to former embodiments which do not necessarily comprise all features to implement embodiments of the claimed invention are understood to not represent embodiments of the invention but to relate to examples useful for understanding the embodiments of the invention.

According to a first aspect, an embodiment of this application provides a reverse charging system, where the charging system includes a first electronic device and a second electronic device; the first electronic device is configured to boost a first battery voltage of the first electronic device to a first voltage value, and then use the first voltage value to perform reverse charging on the second electronic device; and the second electronic device is configured to adjust the first voltage value to a second battery voltage of the second electronic device, and use the second battery voltage to implement charging, where the first battery voltage of the first electronic device decreases as power supply duration of the first electronic device increases, and the second battery voltage of the second electronic device increases as charging duration of the second electronic device increases. The first electronic device comprises a boost circuit, the first voltage value is a specified voltage value, and the specified voltage value is a minimum charging voltage value allowed by the second electronic device; and the first electronic device is specifically configured to: when a first value and a second value meet a preset condition, boost the first battery voltage of the first electronic device to the specified voltage value by using the boost circuit, and use the specified voltage value to perform reverse charging on the second electronic device; and the first value is a product of a first battery capacity of the first electronic device and a first remaining electricity quantity of the first electronic device, the second value is a product of a second battery capacity of the second electronic device and a second remaining electricity quantity of the second electronic device, and the preset condition comprises any one of the following: the first value is less than the second value, both the first value and the second value are less than a preset value, and both the first value and the second value are greater than the preset value.

In this way, in a reverse charging process, the second electronic device can use a voltage suitable for a second battery to charge the battery of the second electronic device, improving reverse charging efficiency. The first electronic device has an enough electricity quantity to run, improving user experience.

In a possible implementation, the first electronic device includes a first charging chip, the second electronic device includes a buck circuit, and the first voltage value is X times the first battery voltage of the first electronic device, where X is a positive integer greater than 1; the first charging chip is configured to boost the first battery voltage of the first electronic device to the X times the first battery voltage; and the buck circuit is configured to adjust the X times the first battery voltage to the second battery voltage of the second electronic device. In this way, the second electronic device can adjust the X times the first battery voltage to the second battery voltage of the second electronic device, further improving reverse charging efficiency.

In a possible implementation, the first electronic device is specifically configured to: when a temperature of the first electronic device is higher than a first temperature threshold and lower than a second temperature threshold, boost the first battery voltage of the first electronic device to the X times the first battery voltage by using the first charging chip, and use the X times the first battery voltage to perform reverse charging on the second electronic device; and the first temperature threshold is less than the second temperature threshold. In this way, a temperature of the first electronic device in a reverse charging process increases relatively little, improving user experience, and improving charging efficiency.

In a possible implementation, the first electronic device further includes a boost circuit, the second electronic device further includes a second charging chip, and the first voltage value is Y times the second battery voltage of the second electronic device, where Y is a positive integer greater than 1; the first electronic device is specifically configured to: when a temperature of the second electronic device is higher than the second temperature threshold, and the first electronic device boosts the first battery voltage of the first electronic device to the X times the first battery voltage by using the first charging chip, switch to boost the first battery voltage of the first electronic device to the Y times the second battery voltage by using the boost circuit, and use the Y times the second battery voltage to perform reverse charging on the second electronic device; and the second electronic device is specifically configured to: when the temperature of the second electronic device is higher than the second temperature threshold, and the second electronic device bucks the X times the first battery voltage to the second battery voltage of the second electronic device by using the buck circuit, switch to adjust the Y times the second battery voltage to the second battery voltage of the second electronic device by using the second charging chip, and use the second battery voltage to implement charging.

In this way, a temperature increase speed of the second electronic device in a reverse charging process can be slowed down, improving charging efficiency, and improving user experience.

In a possible implementation, the first electronic device further includes a boost circuit, the first voltage value is a specified voltage value, and the specified voltage value is a minimum charging voltage value allowed by the second electronic device; and the first electronic device is specifically configured to: when the temperature of the first electronic device is lower than the first temperature threshold or the temperature of the first electronic device is higher than the second temperature threshold, and the first electronic device boosts the first battery voltage of the first electronic device to the X times the first battery voltage by using the first charging chip, switch to boost the first battery voltage of the first electronic device to the specified voltage value by using the boost circuit, and use the specified voltage value to perform reverse charging on the second electronic device. In this way, when the temperature of the first electronic device increases or decreases, switching a charging policy can slow down a temperature increase speed of the first electronic device in a reverse charging process, improving user experience.

In a possible implementation, the first electronic device is specifically configured to: when a first value is greater than a second value, boost the first battery voltage of the first electronic device to the X times the first battery voltage by using the first charging chip, and use the X times the first battery voltage to perform reverse charging on the second electronic device; and the first value is a product of a first battery capacity of the first electronic device and a first remaining electricity quantity of the first electronic device, the second value is a product of a second battery capacity of the second electronic device and a second remaining electricity quantity of the second electronic device, the first value is greater than a preset value, and the second value is less than the preset value. In this way, when an electricity quantity of the first electronic device is sufficient, the first charging chip is used to boost a voltage, improving charging efficiency.

In a possible implementation, the first electronic device includes a boost circuit, the first voltage value is a specified voltage value, and the specified voltage value is a minimum charging voltage value allowed by the second electronic device; the first electronic device is specifically configured to: when a temperature of the first electronic device is lower than a first temperature threshold or the temperature of the first electronic device is higher than a second temperature threshold, and a first value is greater than a second value, boost the first battery voltage of the first electronic device to the specified voltage value by using the boost circuit, and use the specified voltage value to perform reverse charging on the second electronic device; the first temperature threshold is less than the second temperature threshold; and the first value is a product of a first battery capacity of the first electronic device and a first remaining electricity quantity of the first electronic device, the second value is a product of a second battery capacity of the second electronic device and a second remaining electricity quantity of the second electronic device, the first value is greater than a preset value, and the second value is less than the preset value. In this way, the temperature of the first electronic device increases relatively little in a charging process, improving user experience.

In a possible implementation, the first electronic device includes a boost circuit, the second electronic device includes a second charging chip, and the first voltage value is Y times the second battery voltage of the second electronic device, where Y is a positive integer greater than 1; the boost circuit is configured to boost the first battery voltage of the first electronic device to the Y times the second battery voltage; and the second charging chip is configured to adjust the Y times the second battery voltage to the second battery voltage of the second electronic device. In this way, the second charging chip can adjust the Y times the second battery voltage to the second battery voltage of the second electronic device, improving charging power.

In a possible implementation, the first electronic device further includes a first protocol module, and the second electronic device further includes a second protocol module; the first protocol module is configured to: when the first electronic device performs reverse charging on the second electronic device, receive the second battery voltage of the second electronic device from the second protocol module in real time; and the second protocol module is configured to: when the second electronic device uses the second battery voltage to implement charging, send the second battery voltage of the second electronic device to the first protocol module in real time. In this way, in a reverse charging process, the second electronic device can obtain the second battery voltage by using a buck module, improving charging efficiency. Therefore, an increased voltage of the first electronic device is more accurate.

In a possible implementation, the first electronic device includes a boost circuit, the second electronic device includes a buck circuit, and the first voltage value is a voltage value that is in a preset voltage value and that has a smallest difference from a voltage upper limit value of the second electronic device; the boost circuit is configured to boost the first battery voltage of the first electronic device to the voltage value that is in the preset voltage value and that has the smallest difference from the voltage upper limit value of the second electronic device; and the buck circuit is configured to adjust, to the second battery voltage of the second electronic device, the voltage value that is in the preset voltage value and that has the smallest difference from the voltage upper limit value of the second electronic device. In this way, it can adapt to the first electronic device or the second electronic device without a charging chip, improving reverse charging compatibility and also improving charging efficiency.

In a possible implementation, the first electronic device further includes the first protocol module, and the second electronic device further includes the second protocol module; the first protocol module is configured to: when the first electronic device is wiredly connected to the second electronic device, receive the voltage upper limit value of the second electronic device from the second protocol module; the first voltage value is less than the voltage upper limit value; and the second protocol module is configured to obtain the voltage upper limit value of the second electronic device. In this way, a voltage output by the first electronic device causes no damage to the second electronic device, improving user experience.

In a possible implementation, the first electronic device is further configured to: when the first electronic device is wiredly connected to the second electronic device, perform reverse charging on the second electronic device if the first battery capacity of the first electronic device is greater than the second battery capacity of the second electronic device, or the first value of the first electronic device is greater than the second value of the second electronic device. In this way, a device with a large battery capacity charges a device with a small battery capacity, improving user experience.

In a possible implementation, the first electronic device is further configured to: when the first electronic device is wiredly connected to the second electronic device, display a first interface, where the first interface includes prompt information used to prompt whether to use the first electronic device for external charging, and a first button and a second button, and when an operation for the first button is received, use the first voltage value to perform reverse charging on the second electronic device, or when an operation for the second button is received, accept charging from the second electronic device. In this way, a user can independently select a charging device and a power supply device, improving user experience.

In a possible implementation, the first electronic device is further configured to: display a second interface, and when the user inputs a cut-off electricity quantity for reverse charging on the second electronic device on the second interface, obtain the cut-off electricity quantity for reverse charging on the second electronic device; the second interface is configured to receive the cut-off electricity quantity that is for reverse charging on the second electronic device and that is input by the user; and the first electronic device is further configured to: when the first remaining electricity quantity of the first electronic device reaches the cut-off electricity quantity, stop performing reverse charging on the second electronic device. In this way, the first electronic device can charge the second electronic device to an electricity quantity meeting a user requirement, improving user experience.

According to a second aspect, an embodiment of this application provides a reverse charging method, and the method includes: A first electronic device boosts a first battery voltage of the first electronic device to a first voltage value, and then uses the first voltage value to perform reverse charging on the second electronic device; and the second electronic device adjusts the first voltage value to a second battery voltage of the second electronic device, and uses the second battery voltage to implement charging, where the first battery voltage of the first electronic device decreases as power supply duration of the first electronic device increases, and the second battery voltage of the second electronic device increases as charging duration of the second electronic device increases.

The first voltage value is X times the first battery voltage of the first electronic device, where X is a positive integer greater than 1; the first electronic device includes a first charging chip, and the second electronic device includes a buck circuit; that a first electronic device boosts a first battery voltage of the first electronic device to a first voltage value includes: The first electronic device boosts the first battery voltage of the first electronic device to the X times the first battery voltage by using the first charging chip; and that the second electronic device adjusts the first voltage value to a second battery voltage of the second electronic device includes: The second electronic device adjusts the X times the first battery voltage to the second battery voltage of the second electronic device by using the buck circuit.

A first electronic device boosts a first battery voltage of the first electronic device to a first voltage value, and then uses the first voltage value to perform reverse charging on the second electronic device includes: When a temperature of the first electronic device is higher than a first temperature threshold and lower than a second temperature threshold, the first electronic device boosts the first battery voltage of the first electronic device to the X times the first battery voltage by using the first charging chip, and uses the X times the first battery voltage to perform reverse charging on the second electronic device, where the first temperature threshold is less than the second temperature threshold.

In a possible implementation, the first electronic device further includes a boost circuit, the second electronic device includes a second charging chip, and the first voltage value is Y times the second battery voltage of the second electronic device, where Y is a positive integer greater than 1; that a first electronic device boosts a first battery voltage of the first electronic device to a first voltage value, and then uses the first voltage value to perform reverse charging on the second electronic device includes: When a temperature of the second electronic device is higher than the second temperature threshold, and the first electronic device boosts the first battery voltage of the first electronic device to the X times the first battery voltage by using the first charging chip, the first electronic device switches to boost the first battery voltage of the first electronic device to the Y times the second battery voltage by using the boost circuit, and uses the Y times the second battery voltage to perform reverse charging on the second electronic device; and that the second electronic device adjusts the first voltage value to a second battery voltage of the second electronic device, and uses the second battery voltage to implement charging includes: When the temperature of the second electronic device is higher than the second temperature threshold, and the second electronic device bucks the X times the first battery voltage to the second battery voltage of the second electronic device by using the buck circuit, the second electronic device switches to adjust the Y times the second battery voltage to the second battery voltage of the second electronic device by using the second charging chip, and uses the second battery voltage to implement charging.

The first electronic device further includes a boost circuit, the first voltage value is a specified voltage value, and the specified voltage value is a minimum charging voltage value allowed by the second electronic device; and that a first electronic device boosts a first battery voltage of the first electronic device to a first voltage value, and then uses the first voltage value to perform reverse charging on the second electronic device includes: When the temperature of the first electronic device is lower than the first temperature threshold or the temperature of the first electronic device is higher than the second temperature threshold, and the first electronic device boosts the first battery voltage of the first electronic device to the X times the first battery voltage by using the first charging chip, the first electronic device switches to boost the first battery voltage of the first electronic device to the specified voltage value by using the boost circuit, and uses the specified voltage value to perform reverse charging on the second electronic device.

In a possible implementation, the first electronic device further includes a boost circuit, and that a first electronic device boosts a first battery voltage of the first electronic device to a first voltage value, and then uses the first voltage value to perform reverse charging on the second electronic device includes: When a first value is greater than a second value, the first electronic device boosts the first battery voltage of the first electronic device to the X times the first battery voltage by using the first charging chip, and uses the X times the first battery voltage to perform reverse charging on the second electronic device, where the first value is a product of a first battery capacity of the first electronic device and a first remaining electricity quantity of the first electronic device, the second value is a product of a second battery capacity of the second electronic device and a second remaining electricity quantity of the second electronic device, the first value is greater than a preset value, and the second value is less than the preset value.

In a possible implementation, the first electronic device includes a boost circuit, the first voltage value is a specified voltage value, and the specified voltage value is a minimum charging voltage value allowed by the second electronic device; and that a first electronic device boosts a first battery voltage of the first electronic device to a first voltage value, and then uses the first voltage value to perform reverse charging on the second electronic device includes: When a first value and a second value meet a preset condition, the first electronic device boosts the first battery voltage of the first electronic device to the specified voltage value by using the boost circuit, and uses the specified voltage value to perform reverse charging on the second electronic device; and the first value is a product of a first battery capacity of the first electronic device and a first remaining electricity quantity of the first electronic device, the second value is a product of a second battery capacity of the second electronic device and a second remaining electricity quantity of the second electronic device, and the preset condition includes any one of the following: the first value is less than the second value, both the first value and the second value are less than a preset value, and both the first value and the second value are greater than the preset value.

In a possible implementation, the first electronic device includes a boost circuit, the first voltage value is a specified voltage value, and the specified voltage value is a minimum charging voltage value allowed by the second electronic device; and that a first electronic device boosts a first battery voltage of the first electronic device to a first voltage value, and then uses the first voltage value to perform reverse charging on the second electronic device includes: When the temperature of the first electronic device is lower than the first temperature threshold or the temperature of the first electronic device is higher than the second temperature threshold, and a first value is greater than a second value, the first electronic device boosts the first battery voltage of the first electronic device to the specified voltage value by using the boost circuit, and uses the specified voltage value to perform reverse charging on the second electronic device; the first temperature threshold is less than the second temperature threshold; and the first value is a product of a first battery capacity of the first electronic device and a first remaining electricity quantity of the first electronic device, the second value is a product of a second battery capacity of the second electronic device and a second remaining electricity quantity of the second electronic device, the first value is greater than a preset value, and the second value is less than the preset value.

In a possible implementation, the first electronic device includes a boost circuit, the second electronic device includes a second charging chip, and the first voltage value is Y times the second battery voltage of the second electronic device, where Y is a positive integer greater than 1; that a first electronic device boosts a first battery voltage of the first electronic device to a first voltage value includes: The first electronic device boosts the first battery voltage of the first electronic device to the Y times the second battery voltage by using the boost circuit; and that the second electronic device adjusts the first voltage value to a second battery voltage of the second electronic device includes: The second electronic device adjusts the Y times the second battery voltage to the second battery voltage of the second electronic device by using the second charging chip.

In a possible implementation, the first electronic device further includes a first protocol module, the second electronic device further includes a second protocol module, and the method further includes: When the first electronic device performs reverse charging on the second electronic device, the first protocol module receives the second battery voltage of the second electronic device from the second protocol module in real time; and when the second electronic device uses the second battery voltage to implement charging, the second protocol module sends the second battery voltage of the second electronic device to the first protocol module in real time.

In a possible implementation, the first electronic device includes a boost circuit, the second electronic device includes a buck circuit, and the first voltage value is a voltage value that is in a preset voltage value and that has a smallest difference from a voltage upper limit value of the second electronic device; that a first electronic device boosts a first battery voltage of the first electronic device to a first voltage value includes: The first electronic device is configured to boost, by using the boost circuit, the first battery voltage of the first electronic device to the voltage value that is in the preset voltage value and that has the smallest difference from the voltage upper limit value of the second electronic device; and that the second electronic device adjusts the first voltage value to a second battery voltage of the second electronic device includes: The second electronic device adjusts, by using the buck circuit, the voltage value that is in the preset voltage value and that has the smallest difference from the voltage upper limit value of the second electronic device to the second battery voltage of the second electronic device.

In a possible implementation, the first electronic device further includes the first protocol module, the second electronic device further includes the second protocol module, and the method further includes: When the first electronic device is wiredly connected to the second electronic device, the first protocol module receives the voltage upper limit value of the second electronic device from the second protocol module, where the first voltage value is less than the voltage upper limit value; and the second protocol module obtains the voltage upper limit value of the second electronic device.

In a possible implementation, the method further includes: When the first electronic device is wiredly connected to the second electronic device, the first electronic device performs reverse charging on the second electronic device if the first battery capacity of the first electronic device is greater than the second battery capacity of the second electronic device, or the first value of the first electronic device is greater than the second value of the second electronic device.

In a possible implementation, the method further includes: When the first electronic device is wiredly connected to the second electronic device, the first electronic device displays a first interface, where the first interface includes prompt information used to prompt whether to use the first electronic device for external charging, and a first button and a second button; and when an operation for the first button is received, uses the first voltage value to perform reverse charging on the second electronic device, or when an operation for the second button is received, accepts charging from the second electronic device.

In a possible implementation, the method further includes: The first electronic device displays a second interface, and when a user inputs a cut-off electricity quantity for reverse charging on the second electronic device on the second interface, obtains the cut-off electricity quantity for reverse charging on the second electronic device, where the second interface is configured to receive the cut-off electricity quantity that is for reverse charging on the second electronic device and that is input by the user; and
the first electronic device stops performing reverse charging on the second electronic device when the first remaining electricity quantity of the first electronic device reaches the cut-off electricity quantity.

According to an example which is not covered by the claims but useful for understanding the application, an electronic device includes a processor and a memory. The memory is configured to store code instructions, and the processor is configured to run the code instructions, to perform the steps performed by the first electronic device in the method according to any one of the first aspect or the possible implementations of the first aspect, or to perform the steps performed by the second electronic device in the method according to any one of the first aspect or the possible implementations of the first aspect.

According to another example which is not covered by the claims but useful for understanding the application, a computer-readable storage medium stores a computer program. The computer program is executed by a processor to implement the steps performed by the first electronic device in the method according to any one of the first aspect or the possible implementations of the first aspect, or the computer program is executed by the processor to implement the steps performed by the second electronic device in the method according to any one of the first aspect or the possible implementations of the first aspect.

According to another example which is not covered by the claims but useful for understanding the application, a computer program product includes a computer program. When the computer program is run, a computer is enabled to perform the steps performed by the first electronic device in the method according to any one of the first aspect or the possible implementations of the first aspect, or the computer is enabled to perform the steps performed by the second electronic device in the method according to any one of the first aspect or the possible implementations of the first aspect.

According to another example which is not covered by the claims but useful for understanding the application, a chip includes a processor. The processor is configured to invoke a computer program in a memory to perform the steps performed by the first electronic device in the method according to any one of the first aspect or the possible implementations of the first aspect, or to perform the steps performed by the second electronic device in the method according to any one of the first aspect or the possible implementations of the first aspect.

It should be understood that technical solutions of the second aspect of this application correspond to those of the first aspect of this application, and beneficial effects achieved in these aspects and corresponding feasible implementations are similar. Details are not described again.

### BRIEF DESCRIPTION OF DRAWINGS

FIG. 1A and FIG. 1B are a schematic diagram of an application scenario of a reverse charging system according to an embodiment of this application;
FIG. 2 is a schematic diagram of a structure of an electronic device according to an embodiment of this application;
FIG. 3 is a schematic diagram of an internal architecture of a reverse charging system according to an embodiment of this application;
FIG. 4 is a first schematic circuit diagram of a reverse charging system according to an embodiment of this application;
FIG. 5 is a second schematic circuit diagram of a reverse charging system according to an embodiment of this application;
FIG. 6 is a third schematic circuit diagram of a reverse charging system according to an embodiment of this application;
FIG. 7 is a first schematic diagram of simulation results of an input voltage and an output voltage of a boost boost circuit according to an embodiment of this application;
FIG. 8 is a second schematic diagram of simulation results of an input voltage and an output voltage of a boost boost circuit according to an embodiment of this application;
FIG. 9 is a first schematic diagram of simulation results of an input voltage and an output voltage of a buck circuit according to an embodiment of this application;
FIG. 10 is a first schematic diagram of simulation results of an input voltage and an output voltage of a buck circuit according to an embodiment of this application;
FIG. 11 is a schematic flowchart of a reverse charging method according to an embodiment of this application;
FIG. 12 is a schematic diagram of a first interface according to an embodiment of this application;
FIG. 13 is a schematic diagram of a second interface according to an embodiment of this application;
FIG. 14 is a schematic diagram of a hardware structure of an electronic device according to an embodiment of this application; and
FIG. 15 is a schematic diagram of a structure of a chip according to an embodiment of this application.

### DESCRIPTION OF EMBODIMENTS

To clearly describe technical solutions in embodiments of this application, in embodiments of this application, words such as "first" and "second" are used to distinguish between same items or similar items with basically the same functions and effects. For example, an interface of a first target function and an interface of a second target function are for distinguishing between different response interfaces, and do not limit a sequence between the interfaces. Persons skilled in the art may understand that the words such as "first" and "second" do not limit a quantity and an execution sequence, and the words such as "first" and "second" do not indicate a definite difference.

It should be noted that in this application, the word such as "example" or "for example" is used to represent giving an example, an illustration, or a description. Any embodiment or design solution described as "example" or "for example" in this application should not be construed as being preferred or advantageous over other embodiments or design solutions. Exactly, the words such as "example" or "for example" are intended to present related concepts in a specific manner.

In this application, "at least one" means one or more, and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually indicates an "or" relationship between associated objects. "At least one of the following items" or a similar expression means any combination of these items, including any combination of a single item or a plurality of items. For example, at least one of a, b, or c may represent a, b, c, a and b, a and c, b and c, or a, b, and c, where a, b, and c may be singular or plural.

The technical solutions provided in embodiments of this application may be applied to a reverse charging scenario of an electronic device. In a scenario of being out for a long time, the electronic device may be powered off due to being unable to charge for a long time, which causes inconvenience to a user. Currently, most electronic devices are powered by using large capacity batteries. In addition, the electronic devices may include hardware supporting reverse charging, for example, a boost circuit and a buck circuit in a mobile phone. In this way, the electronic device can be used as a power source to perform reverse charging on another electronic device with a relatively low electricity quantity, to provide an emergency solution for charging the electronic device for the user.

In one implementation, when a mobile phone A wirelessly charges a mobile phone B, the mobile phone A may boost a voltage by using a boost circuit, and radiate a wireless charging signal based on a boosted voltage. The mobile phone B receives the wireless charging signal, and converts the received wireless charging signal into an input voltage to charge a battery of the mobile phone B. In this way, the mobile phone A can wirelessly charge the mobile phone B, so that an electricity quantity of the mobile phone B is supplemented in a timely manner, and the mobile phone B is not powered off due to a low electricity quantity, causing inconvenience to the user.

However, in the foregoing implementation, after a voltage of the mobile phone A is boosted by a specific multiple, a voltage of the mobile phone B is bucked by a specific multiple. The bucked voltage of the mobile phone B may be not necessarily equal to a battery voltage of the mobile phone B, for example, may be greater than or less than the battery voltage of the mobile phone B, resulting in relatively more losses during a charging process, and relatively low charging efficiency.

Based on a problem of relatively low reverse charging efficiency in the conventional technology, an embodiment of this application provides a reverse charging system. In the reverse charging system, a first electronic device is a power supply device, and a second electronic device is a charging device. In a process in which the first electronic device charges the second electronic device, the first electronic device uses a boosted first voltage value to charge the second electronic device. The second electronic device can adjust the first voltage value output by the first electronic device to a second battery voltage of the second electronic device, and use the second battery voltage to implement charging. In this way, when the second electronic device is charging, the battery voltage and a charging voltage can be highly matched, thereby improving reverse charging efficiency.

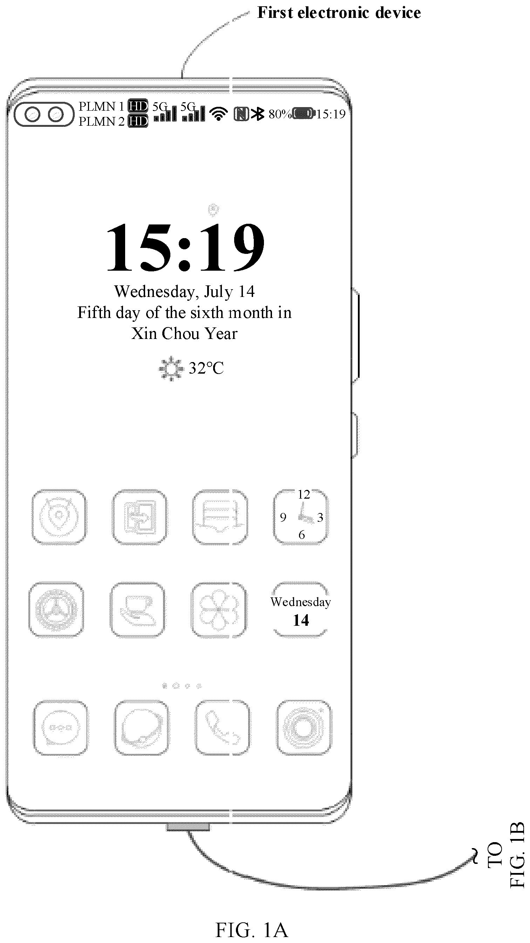

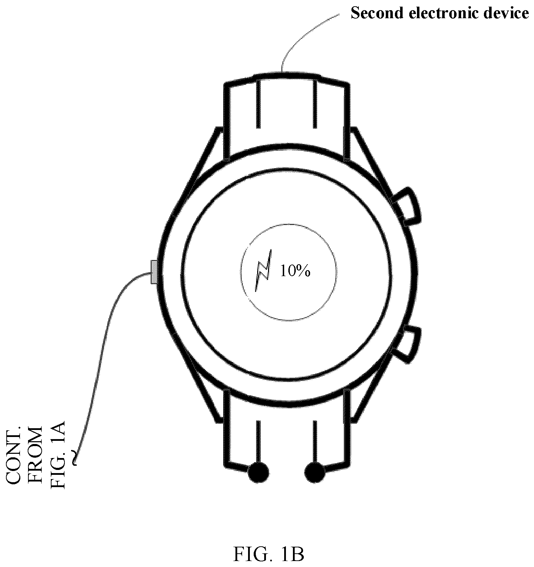

For example, FIG. 1A and FIG. 1B are a schematic diagram of an application scenario of a reverse charging system according to an embodiment of this application. As shown in FIG. 1, the application scenario may include a first electronic device and a second electronic device. An interface displayed by the first electronic device may include time, weather, and a plurality of application controls. This embodiment of this application is described merely by using an example in which the first electronic device displays the interface shown in FIG. 1A and FIG. 1B. This example does not constitute a limitation on this embodiment of this application.

As shown in FIG. 1A and FIG. 1B, a current remaining electricity quantity of the first electronic device is 80%, and a current remaining electricity quantity of the second electronic device is 10%. When the first electronic device is wiredly connected to the second electronic device, the first electronic device may charge the second electronic device.

For example, according to the reverse charging system provided in this embodiment of this application, that a mobile phone performs reverse charging on a headset, or a mobile phone performs reverse charging on another mobile phone can be implemented. The headset is portable, is small in size, and has a battery capacity that is usually less than a battery capacity of the mobile phone. Therefore, when an electricity quantity of the headset is relatively low, the mobile phone can be used as a power source to charge the headset, which can provide greater convenience for the user.

It may be understood that the first electronic device and the second electronic device each may also be referred to as a terminal (terminal), user equipment (user equipment, UE), a mobile station (mobile station, MS), a mobile terminal (mobile terminal, MT), and the like. The electronic device may be a mobile phone (mobile phone) with a MIC, a smart TV, a wearable device, a tablet computer (Pad), a computer with a wireless sending/receiving function, a virtual reality (virtual reality, VR) electronic device, an augmented reality (augmented reality, AR) electronic device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the electronic device are not limited in embodiments of this application.

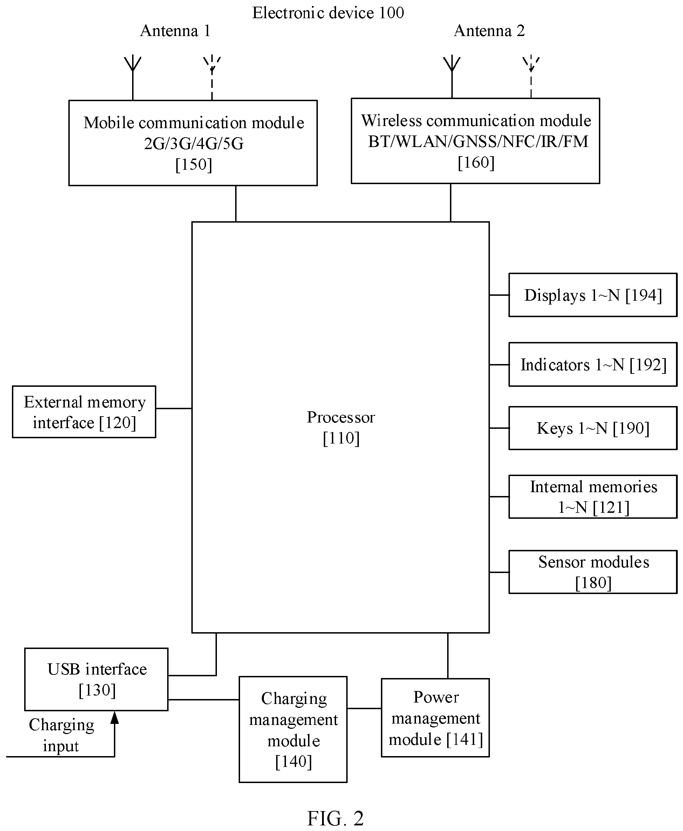

To better understand embodiments of this application, the following describes a structure of the electronic device in the embodiments of this application. For example, FIG. 2 is a schematic diagram of a structure of an electronic device according to an embodiment of this application.

An electronic device 100 may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, a sensor module 180, a key 190, an indicator 192, a display 194, and the like.

It may be understood that the structure illustrated in the embodiments of this application does not constitute a specific limitation on the electronic device. In some other embodiments of this application, the electronic device may include more or fewer components than those shown in the figure, or combine some components, or split some components, or have different component arrangements. The illustrated components may be implemented by hardware, software, or a combination of software and hardware.

The processor 110 may include one or more processing units. Different processing units may be independent components, or may be integrated into one or more processors. A memory may be further disposed in the processor 110, and is configured to store instructions and data.

The USB interface 130 is an interface that complies with USB standard specifications, and may be specifically a Mini USB interface, a Micro USB interface, a USB Type C interface, or the like. The USB interface 130 may be configured to connect to a charger to charge the electronic device, may be configured to transmit data between the electronic device and a peripheral device, or may be configured to connect to a headset to play audio by using the headset. The interface may alternatively be configured to connect to another electronic device, for example, an AR device. In this embodiment of this application, the USB interface 130 may alternatively be configured to connect to another electronic device, to perform reverse charging on the connected electronic device.

The charging management module 140 is configured to receive a charging input from a charger. The charger may be a wireless charger or a wired charger. The charging management module 140 may be further configured to receive a charging input from another electronic device. Refer to the scenario in FIG. 1A and FIG. 1B. The power management module 141 is configured to connect to the charging management module 140 and the processor 110.

A wireless communication function of the electronic device may be implemented by using the antenna 1, the antenna 2, the mobile communication module 150, the wireless communication module 160, a modem processor, a baseband processor, and the like.

The mobile communication module 150 may provide a solution to wireless communication such as 2G/3G/4G/5G applied to the electronic device.

The wireless communication module 160 may provide a solution that is applied to the electronic device and that includes wireless communication such as a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), or frequency modulation (frequency modulation, FM).

The electronic device implements a display function by using a GPU, the display 194, an application processor, and the like. The GPU is a microprocessor for image processing and is connected to the display 194 and the application processor. The GPU is configured to perform mathematical and geometric computing for graphics rendering.

The display 194 is configured to display an image, a video, and the like. The display 194 includes a display panel. In some embodiments, the electronic device may include one or N displays 194, where N is a positive integer greater than 1.

The external memory interface 120 may be configured to connect to an external memory card, for example, a Micro SD card, to expand a storage capacity of the electronic device. The external memory card communicates with the processor 110 by using the external memory interface 120, to implement a data storage function, for example, to store files such as music and a video in the external memory card.

The internal memory 121 may be configured to store computer-executable program code, and the executable program code includes instructions. The internal memory 121 may include a program storage area and a data storage area.

The sensor module 180 may include the following one or more sensors, such as a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, or a bone conduction sensor (not shown in FIG. 2).

The electronic device 100 may further include a power management integrated circuit (Power Management IC, PMIC for short), a boost circuit, a buck circuit, and a charging chip SC charger (not shown in FIG. 2). The PMIC is configured to manage a power device in a host system of the electronic device, and the like. The power management integrated circuit (Power Management IC, PMIC for short), the boost circuit, the buck circuit, and the charging chip SC charger are included in the power management module 141 or may be in the charging management module 140.

For example, the boost circuit is configured to perform boost processing on a battery voltage of the electronic device when the electronic device performs external charging. The buck circuit is configured to: when the electronic device receives a voltage input by another electronic device, perform buck processing on the received voltage, and use a bucked voltage to implement charging. The SC charger has a boost function and a buck function. Therefore, in a reverse charging process of the electronic device, the SC charger may be used as a boost circuit, or may be used as a buck circuit.

For example, the boost circuit, the buck circuit, and the charging chip SC charger may be integrated into the PMIC, or may be separately disposed. This is not limited in this embodiment of this application.

In this embodiment of this application, the boost circuit and the buck circuit may be externally disposed, or may be integrated into the PMIC.

A software system of the electronic device 100 may use a layered architecture, an eventdriven architecture, a microkernel architecture, a microservice architecture, a cloud architecture, or the like. The software system of the electronic device is not specifically limited in this embodiment of this application.

The following describes, in detail by using specific embodiments, the technical solutions of this application and how the foregoing technical problems are resolved by using the technical solutions of this application. The following several specific embodiments may be implemented independently, or may be combined with each other. For same or similar concepts or processes, details may not be described again in some embodiments.

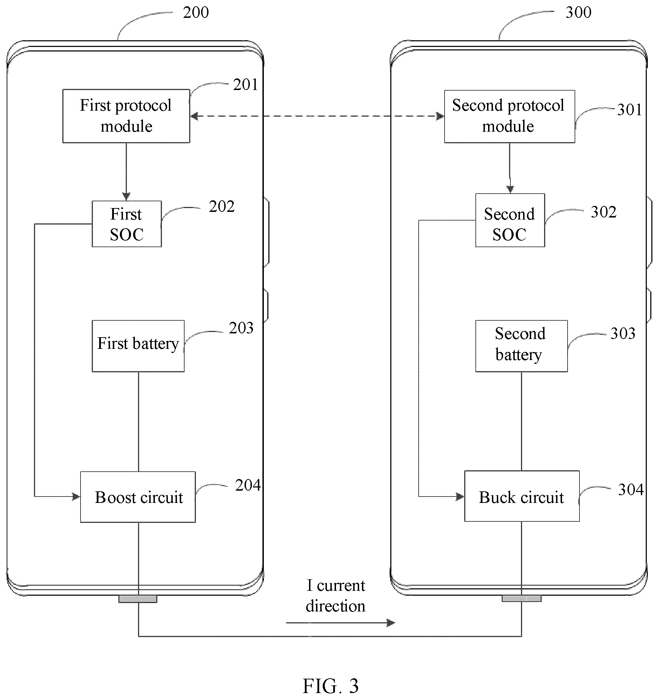

For example, that both the first electronic device and the second electronic device are mobile phones is used as an example for description. FIG. 3 is a schematic diagram of an internal architecture of a reverse charging system according to an embodiment of this application. As shown in FIG. 3, a first electronic device 200 is a power supply device, and a second electronic device 300 is a charging device. The first electronic device 200 may include a first protocol module 201, a first system on chip 202 (system on chip, SOC), a first battery 203, and a boost circuit 204. The second electronic device 300 may include a second protocol module 301, a second SOC 302, a second battery 303, and a buck circuit 304.

Optionally, the first protocol module 201 may be a first protocol chip, and the second protocol module 201 may be a second protocol chip. The boost circuit 204 may be a first SC charger or a boost boost circuit, and the buck circuit 304 may be a second SC charger. The first protocol module 201 may communicate with the second protocol module 301. A charging protocol used when the first protocol module 201 communicates with the second protocol module 301 includes but is not limited to a fast charge protocol (fast fharger protocol, FCP), a super charge protocol (super charge protocol, SCP), a quick charge (quick charge, QC) protocol, a first fast charge protocol (Programmable Power Supply, PPS), a charge protocol (Power Delivery, PD), a second charge protocol (adaptive fast charge, AFC), a VOOC flash charge protocol, and the like.

When the first electronic device 200 is wiredly connected to the second electronic device 300, the first protocol module 201 in the first electronic device 200 may receive a charging requirement instruction from the second protocol module 301 through communication with the second protocol module 301. The charging requirement instruction may carry charging power, a voltage upper limit value, and the like. The second protocol module 301 may send the charging requirement instruction to the first SOC 202 by using an IIC. The first SOC 202 controls the boost circuit 204 to boost a first battery voltage to a first voltage value based on the voltage upper limit value, and uses the first voltage value to perform reverse charging on the second electronic device 300. The first voltage value is less than the voltage upper limit value. The first battery voltage of the first electronic device 200 decreases as power supply duration of the first electronic device 200 increases.

The second protocol module 301 in the second electronic device 300 sends the charging power to the second SOC 302 by using the IIC. The second SOC 302 may control the buck circuit 304 to adjust the first voltage value to a second battery voltage of the second electronic device 300, and use the second battery voltage to implement charging.

It may be understood that the second battery voltage of the second electronic device 300 increases as charging duration of the second electronic device 300 increases. As the charging duration of the second electronic device 300 increases, the second battery voltage continuously increases from 0 V to a cut-off voltage. For example, as the charging duration increases, the second battery voltage of the second electronic device 300 may increase from 3 V to 4.5 V. In a process in which the first electronic device 200 charges the second electronic device 300, when the second battery voltage of the second electronic device 300 reaches the cut-off voltage, the second battery voltage of the second electronic device 300 no longer increases.

For example, the first electronic device 200 boosts the first battery voltage of the first electronic device 200 to 9 V by using a boost boost circuit 2042, and outputs 9 V 1 A to the second electronic device 300. The second electronic device 300 converts 9 V 1 A into 5 V 2 A by using the buck circuit 304 to charge the second battery 303.

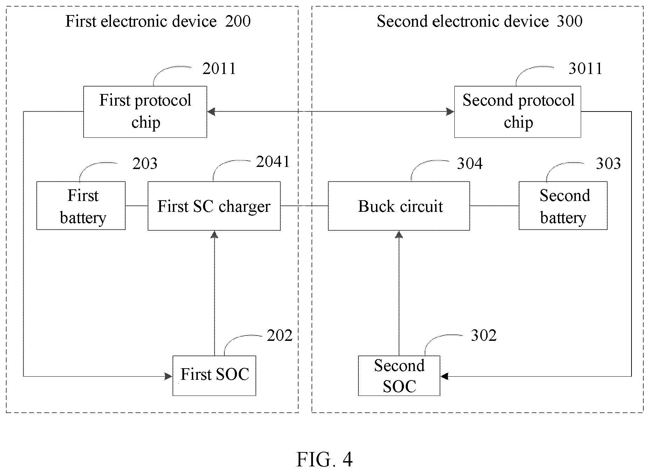

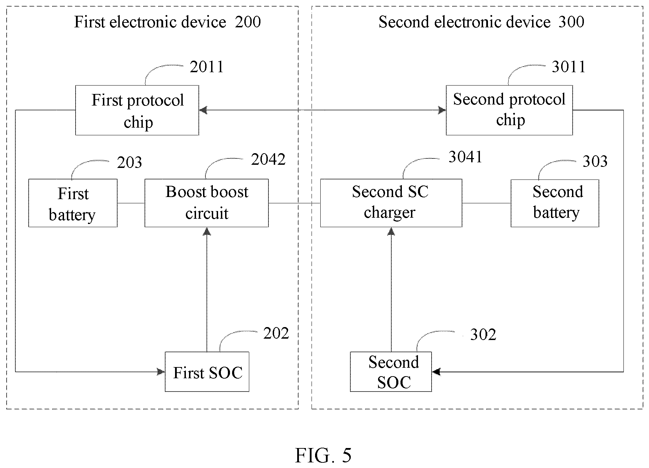

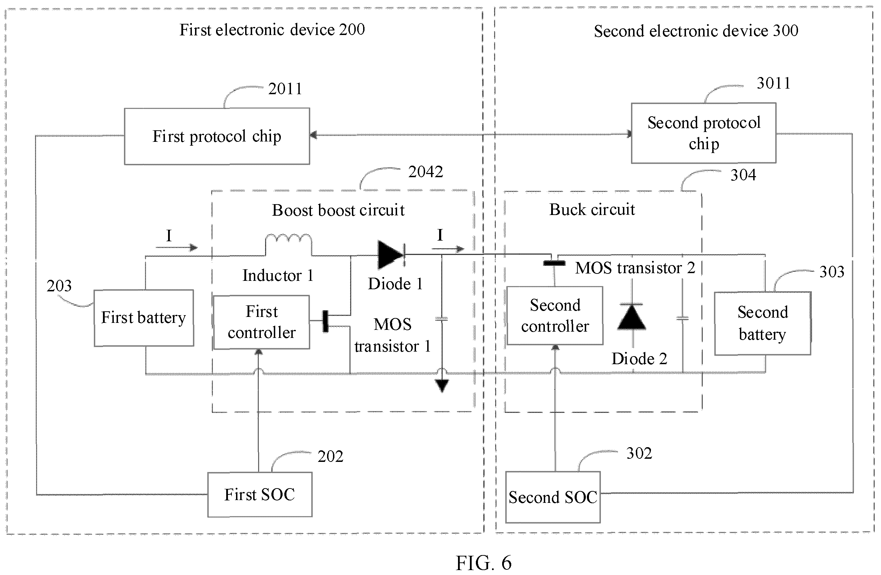

For example, the first electronic device 200 may charge the second electronic device 300 in the following three possible implementations shown in FIG. 4-FIG. 6. With reference to the three possible implementations in FIG. 4-FIG. 6, the following provides examples for describing a process in which the first electronic device 200 performs reverse charging on the second electronic device 300. FIG. 4 is a first schematic circuit diagram of a reverse charging system according to an embodiment of this application. FIG. 5 is a second schematic circuit diagram of a reverse charging system according to an embodiment of this application. FIG. 6 is a third schematic circuit diagram of a reverse charging system according to an embodiment of this application.

In a possible implementation, as shown in FIG. 4, the boost circuit 204 in the first electronic device 200 may be a first charging chip, and the charging chip may be a first SC charger 2041. The first electronic device 200 may include a first protocol chip 2011, the first battery 203, the first SOC 202, and the first SC charger 2041. The second electronic device 300 may include a second protocol chip 3011, the second battery 303, the second SOC 302, and the buck circuit 304. The buck circuit 304 is a continuously adjustable buck circuit.

It may be understood that the SC charger has relatively high conversion efficiency in a power conversion process, and power conversion efficiency of the SC charger can reach a relatively high percentage. For example, the power conversion efficiency of the SC charger may reach 97%. Therefore, using the SC charger to perform reverse charging can reduce power losses and improve reverse charging efficiency.

For example, when the first electronic device 200 is wiredly connected to the second electronic device 300 and it is determined that the first electronic device 200 performs reverse charging on the second electronic device 300, the first protocol chip 2011 may receive a voltage upper limit value from the second protocol chip 3011 through communication between the first protocol chip 2011 and the second protocol chip 3011, and determine, based on the received voltage upper limit value and the first battery voltage, that a voltage value of reverse charging on the second electronic device 300 is X times the first battery voltage, where X is a positive integer greater than 1. The X times the first battery voltage is less than the voltage upper limit value. To further improve reverse charging efficiency, the X times the first battery voltage may be a maximum voltage value allowed in the voltage upper limit value.

The first SOC 202 controls, based on a reverse charging voltage value determined by the first protocol chip 2011, the first SC charger 2041 to boost the first battery voltage of the first electronic device 200 to the X times the first battery voltage, and outputs the X times the first battery voltage to the buck circuit 304 of the second electronic device 300. For example, the first battery voltage is Vabtt1, and the second battery voltage is Vabtt2. When the first electronic device 200 is wiredly connected to the second electronic device 300, the first protocol chip 1011 determines that a battery voltage value of reverse charging may be 2x Vabtt1. The first electronic device 200 boosts Vabtt1 of the first electronic device 200 to 2x Vabtt1 by using the first SC charger 2041, and uses 2x Vabtt1 to charge the second electronic device 300.

It may be understood that, in a reverse charging process, the first battery voltage of the first electronic device 200 decreases as the power supply duration of the first electronic device 200 increases, and a boost ratio of the first SC charger 2041 increases as the first battery voltage decreases.

Correspondingly, the second protocol chip 3011 in the second electronic device 300 may send the second battery voltage to the second SOC 302 in real time. The second SOC 302 controls the buck circuit 304 to buck the X times the first battery voltage to the second battery voltage of the second electronic device 300, and uses the second battery voltage to charge the second battery 303.

It may be understood that, in the reverse charging process, the second battery voltage of the second electronic device 300 increases as the charging duration of the second electronic device 300 increases, and the buck circuit 304 continuously adjusts a buck ratio of the buck circuit 304, so that the buck circuit 304 can buck the X times the first battery voltage to the second battery voltage.

Based on this, the first electronic device 200 boosts a voltage by using the first SC charger 2041, the second electronic device 300 bucks a voltage by using the buck circuit 304, and the first SC charger 2041 generates relatively low heat during reverse charging, so that a temperature increase speed of the first electronic device 200 in the charging process is slow. This reduces power losses and increases power of reverse charging, and can effectively improve reverse charging efficiency and improve user experience.

In a possible implementation, as shown in FIG. 5, the boost circuit 204 in the first electronic device 200 may be a boost boost circuit 2042, the buck circuit 304 in the second electronic device 300 may be a second charging chip, and the charging chip may be a second SC charger 3041. The first electronic device 200 may include a first protocol chip 2011, the first battery 203, the first SOC 202, and the boost boost circuit 2042. The second electronic device 300 may include a second protocol chip 3011, the second battery 303, the second SOC 302, and the second SC charger 3041. The boost boost circuit 2042 is a continuously adjustable boost circuit.

For example, when the first electronic device 200 is wiredly connected to the second electronic device 300 and it is determined that the first electronic device 200 performs reverse charging on the second electronic device 300, the first protocol chip 2011 may receive a voltage upper limit value and the second battery voltage of the second electronic device 300 from the second protocol chip 3011 through communication between the first protocol chip 2011 and the second protocol chip 3011, and determine, based on the received voltage upper limit value, the first battery voltage, and the second battery voltage, that a voltage value of reverse charging on the second electronic device 300 is Y times the second battery voltage, where Y is a positive integer greater than 1. The Y times the second battery voltage is less than the voltage upper limit value.

The first SOC 202 controls, based on the voltage value of reverse charging determined by the first protocol chip 2011, the first SC charger 2041 to boost the first battery voltage of the first electronic device 200 to the Y times the first battery voltage, and outputs the Y times the second battery voltage to the buck circuit 304 of the second electronic device 300. For example, the first battery voltage is Vabtt1, and the second battery voltage is Vabtt2. When the first electronic device 200 is wiredly connected to the second electronic device 300, the first protocol chip 1011 determines that a battery voltage value of reverse charging may be 2x Vabtt2. The first electronic device 200 boosts Vabtt1 to 2x Vabtt2 by using the boost boost circuit 2042, and uses 2x Vabtt2 to perform reverse charging on the second electronic device 300.

It may be understood that, in a reverse charging process, the first battery voltage of the first electronic device 200 decreases as the power supply duration of the first electronic device 200 increases, and a boost ratio of the boost boost circuit 2042 continuously changes as the first battery voltage decreases.

Correspondingly, the second protocol chip 3011 in the second electronic device 300 may send the second battery voltage to the second SOC 302 in real time. The second SOC 302 controls the second SC charger 3041 to buck the Y times the second battery voltage to the second battery voltage of the second electronic device 300, and use the second battery voltage to charge the second battery 303.

It may be understood that, in the reverse charging process, the second battery voltage of the second electronic device 300 increases as the charging duration of the second electronic device 300 increases.

Based on this, the first electronic device 200 boosts the first battery voltage by using the continuously adjustable boost boost circuit 2042, and the second electronic device 300 can buck a boosted voltage to the second battery voltage by using the second SC charger 3041, so that the first electronic device 200 performs reverse charging on the second electronic device 300. The second SC charger 3041 generates relatively low heat, so that a temperature increase speed of the second electronic device 300 in the charging process is slow. This reduces power losses and increases power of reverse charging, and can effectively improve reverse charging efficiency and improve user experience.

In a possible implementation, as shown in FIG. 6, the first electronic device 200 may include a first protocol chip 2011, the first battery 203, the first SOC 202, and a boost boost circuit 2042. The second electronic device 300 may include a second protocol chip 3011, the second battery 303, the second SOC 302, and the buck circuit 304. The boost boost circuit 2042 may increase the first battery voltage of the first electronic device 200 to a preset voltage value, and the preset voltage value is related to charging voltages of different electronic devices. As shown in FIG. 6, the boost boost circuit 2042 may include a first controller, an inductor 1, a MOS transistor 1, and a diode 1. The buck circuit 304 may include a second controller, a MOS transistor 2, and a diode 2.

For example, when the first electronic device 200 is wiredly connected to the second electronic device 300 and it is determined that the first electronic device 200 performs reverse charging on the second electronic device 300, the first protocol chip 2011 may receive a voltage upper limit value from the second protocol chip 3011 through communication between the first protocol chip 2011 and the second protocol chip 3011, and determine, based on the received voltage upper limit value, that a voltage value of reverse charging on the second electronic device 300 is a voltage value that is in the preset voltage value and that has a smallest difference from the voltage upper limit value of the second electronic device.

The first SOC 202 controls, based on the voltage value of reverse charging determined by the first protocol chip 2011, the boost boost circuit 2042 to increase the first battery voltage of the first electronic device 200 to the voltage value that is in the preset voltage value and that has the smallest difference from the voltage upper limit value of the second electronic device, and outputs, to the buck circuit 304 of the second electronic device 300, the voltage value that is in the preset voltage value and that has the smallest difference from the voltage upper limit value of the second electronic device. Optionally, the first SOC 202 boosts, by adjusting a duty ratio of the first controller, the first battery voltage to the voltage value that is in the preset voltage value and that has the smallest difference from the voltage upper limit value of the second electronic device.

It may be understood that, in a reverse charging process, the first battery voltage of the first electronic device 200 decreases as the power supply duration of the first electronic device 200 increases, and a boost ratio of the boost boost circuit 2042 continuously changes as the first battery voltage decreases.

Correspondingly, the second protocol chip 3011 in the second electronic device 300 may send the second battery voltage to the second SOC 302 in real time. The second SOC 302 controls the buck circuit 304 to reduce, to the second battery voltage of the second electronic device 300, the voltage value that is in the preset voltage value and that has the smallest difference from the voltage upper limit value of the second electronic device, and uses the second battery voltage to charge the second battery 303.

It may be understood that, in the reverse charging process, the second battery voltage of the second electronic device 300 increases as the charging duration of the second electronic device 300 increases, and the buck circuit 304 continuously adjusts a buck ratio of the buck circuit 304, so that the buck circuit 304 can buck the X times the first battery voltage to the second battery voltage.

Based on this, the first electronic device 200 boosts a voltage by using the boost boost circuit 2042, and the second electronic device 300 bucks, by using the buck circuit 304, a voltage output by the first electronic device 200, and uses a bucked voltage to charge the second battery 303, so that no hardware needs to be added to the first electronic device 200 and the second electronic device 300, improving compatibility of a reverse charging method. The buck circuit 304 is a buck circuit whose voltage is continuously adjustable. Therefore, a reverse charging circuit shown in FIG. 6 can improve reverse charging efficiency.

In conclusion, when the electronic device performs reverse charging by using the reverse charging circuit shown in FIG. 4-FIG. 6, high-power reverse charging can be implemented, thereby improving reverse charging efficiency.

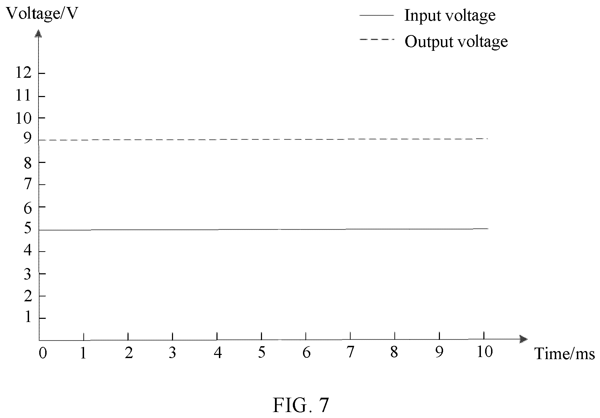

FIG. 7 is a first schematic diagram of simulation results of an input voltage and an output voltage of a boost boost circuit according to an embodiment of this application. The boost boost circuit 2042 in the reverse charging circuit is simulated, and the simulation results including the input voltage and the output voltage as shown in FIG. 7 may be obtained. As shown in FIG. 7, the output voltage of the boost boost circuit 2042 is 5 V, and the output voltage is 9 V. In addition, the input voltage and the output voltage do not increase or decrease as time changes. Therefore, when the input voltage of the boost boost circuit 2042 is 5 V, a voltage of 9 V can be stably output after the voltage is boosted by the boost boost circuit 2042.

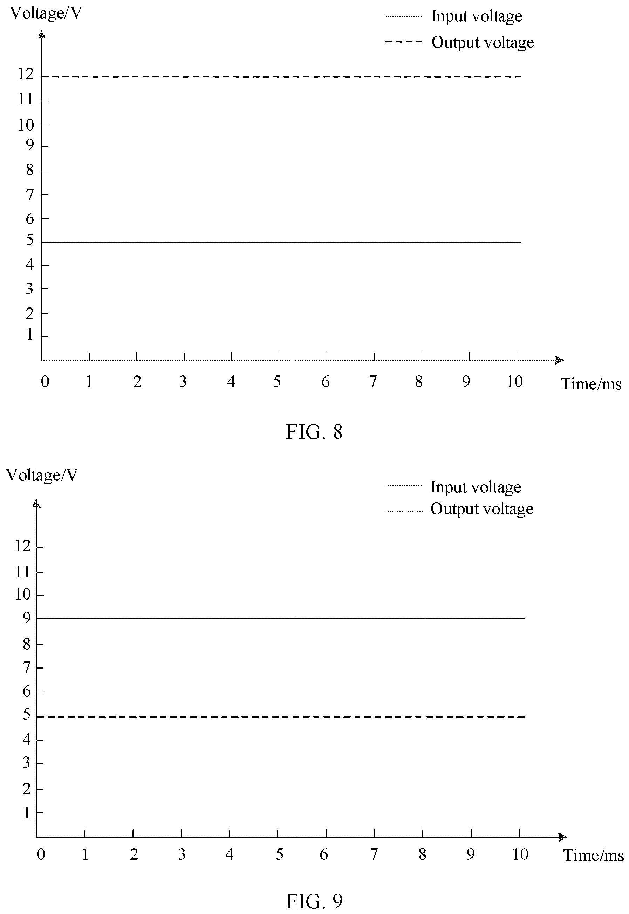

FIG. 8 is a second schematic diagram of simulation results of an input voltage and an output voltage of a boost boost circuit according to an embodiment of this application. The boost boost circuit 2042 in the reverse charging circuit is simulated, and the simulation results including the input voltage and the output voltage as shown in FIG. 8 may be obtained. As shown in FIG. 8, the output voltage of the boost boost circuit 2042 is 5 V, and the output voltage is 12 V. In addition, the input voltage and the output voltage do not increase or decrease as time changes. Therefore, when the input voltage of the boost boost circuit 2042 is 5 V, a voltage of 12 V can be stably output after the voltage is boosted by the boost boost circuit 2042.

Based on this, the boost boost circuit 2042 in the reverse charging circuit can boost the first battery voltage value of the first electronic device 200 to different voltage values. For example, the boost boost circuit 2042 may increase a voltage of 5 V output by a lithium battery of the first electronic device 200 to three power levels: 9 V 1 A, 9 V 2 A, and 12 V 1 A.

FIG. 9 is a first schematic diagram of simulation results of an input voltage and an output voltage of a buck circuit according to an embodiment of this application. The buck circuit 304 in the reverse charging circuit is simulated, and the simulation results including the input voltage and the output voltage as shown in FIG. 9 may be obtained. As shown in FIG. 9, the output voltage of the buck circuit 304 is 9 V, and the output voltage is 5 V. In addition, the input voltage and the output voltage do not increase or decrease as time changes. Therefore, when the input voltage of the buck circuit 304 is 9 V, a voltage of 5 V can be stably output after the voltage is bucked by the buck circuit 304.

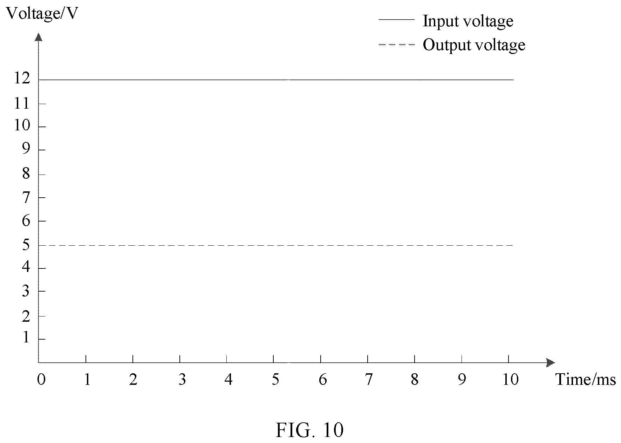

FIG. 10 is a first schematic diagram of simulation results of an input voltage and an output voltage of a buck circuit according to an embodiment of this application. The buck circuit 304 in the reverse charging circuit is simulated, and the simulation results including the input voltage and the output voltage as shown in FIG. 10 may be obtained. As shown in FIG. 10, the output voltage of the buck circuit 304 is 12 V, and the output voltage is 5 V. In addition, the input voltage and the output voltage do not increase or decrease as time changes. Therefore, when the input voltage of the buck circuit 304 is 12 V, a voltage of 5 V can be stably output after the voltage is bucked by the buck circuit 304.

Based on this, the buck circuit 304 in the reverse charging circuit can buck different voltages to the second battery voltage of the second electronic device 300. For example, the buck circuit 304 can buck input voltages of three power levels: 9 V 1 A, 9 V 2 A, and 12 V 1 A to 5 V

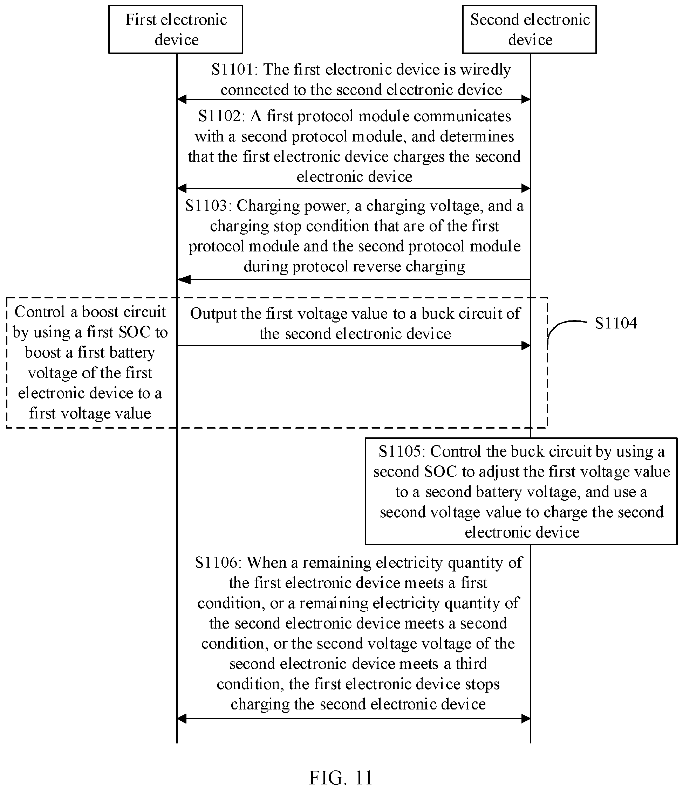

For example, with reference to FIG. 11, an example of the reverse charging method in this embodiment of this application is described. FIG. 11 is a schematic flowchart of a reverse charging method according to an embodiment of this application. As shown in FIG. 11, the reverse charging method includes the following steps.

S1101: A first electronic device is wiredly connected to a second electronic device.

S1102: A first protocol module in the first electronic device communicates with a second protocol module in the second electronic device, and determines that the first electronic device charges the second electronic device.

For example, the first protocol module may communicate with the second protocol module by using a communication protocol. For the communication protocol, refer to the foregoing embodiment. Details are not described in this embodiment.

In a possible implementation, the first protocol module and the second protocol module may determine a charging device and a power supply device based on a first battery capacity of the first electronic device and a second battery capacity of the second electronic device. If the first battery capacity of the first electronic device is greater than the second battery capacity of the second electronic device, the first electronic device charges the second electronic device.

In a possible implementation, the first protocol module and the second protocol module may determine a charging device and a power supply device based on a first value of the first electronic device and a second value of the second electronic device. The first value is a product of a first battery capacity of the first electronic device and a first remaining electricity quantity of the first electronic device. The second value is a product of a second battery capacity of the second electronic device and a second remaining electricity quantity of the second electronic device. If the first value of the first electronic device is greater than the second value of the second electronic device, the first electronic device charges the second electronic device.

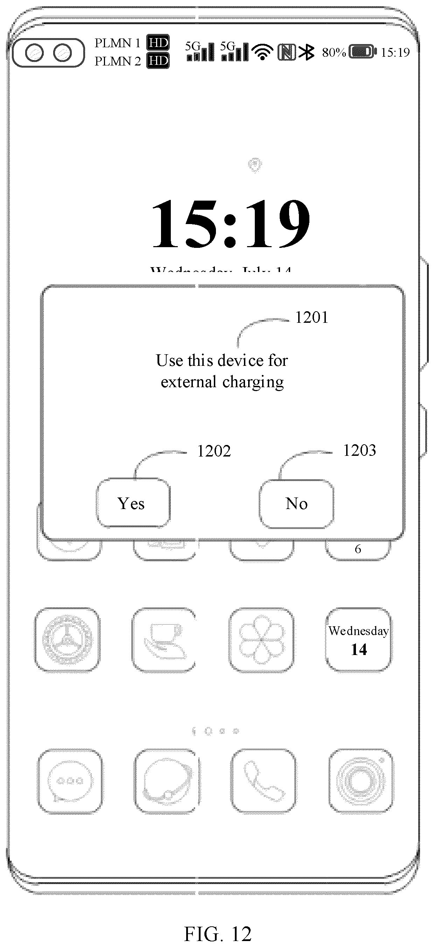

In a possible implementation, the first protocol module and the second protocol module may determine a charging device and a power supply device based on a user selection. For example, FIG. 12 is a schematic diagram of a first interface according to an embodiment of this application. The first interface includes prompt information 1201 used to prompt whether to use the first electronic device for external charging, and a first button 1202 and a second button 1203. As shown in FIG. 12, when the first electronic device is wiredly connected to the second electronic device, the first electronic device may display an interface including "use this device for external charging" and "yes" and "no". "Use this device for external charging" may correspond to the prompt information 1201 prompting whether to use the first electronic device for external charging, a "yes" button may correspond the first button 1202, and a "no" button may correspond the second button 1203.

In a case, when the first electronic device receives an operation for the first button "yes", the first electronic device charges the second electronic device.

In another case, when the first electronic device receives an operation for the second button "no", the first electronic device accepts charging from the second electronic device.

It may be understood that the first interface may alternatively be displayed on the second electronic device.

In this way, a user can independently select the first electronic device as the power supply device or the charging device, improving user experience.

S1103: Charging power, a charging voltage, and a charging stop condition that are of the first protocol module and the second protocol module during protocol reverse charging.

For example, the second protocol module may send a voltage upper limit value and/or a second battery voltage of the second electronic device to the first protocol module. Correspondingly, the first protocol module receives the voltage upper limit value and/or the second battery voltage of the second electronic device from the second protocol module, and determines a charging voltage based on the voltage upper limit value and/or. For details, refer to the foregoing FIG. 4-FIG. 6. Details are not described herein again in this embodiment. The charging power during reverse charging may be determined based on the charging voltage and a charging current.

In a possible implementation, the charging stop condition during reverse charging may include that the remaining electricity quantity of the first electronic device meets a first condition, or the remaining electricity quantity of the second electronic device meets a second condition, or the second battery voltage of the second electronic device meets a third condition.

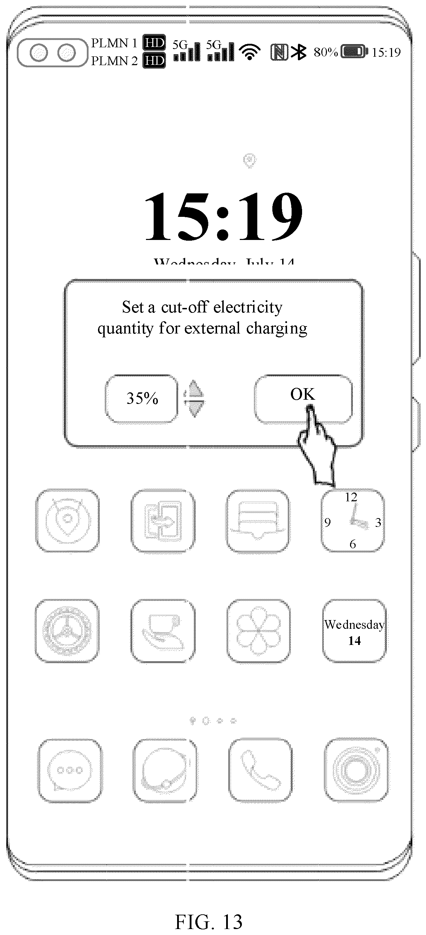

In a possible implementation, the charging stop condition may be set by the user on a display interface of the first electronic device. FIG. 13 is a schematic diagram of a second interface according to an embodiment of this application. The second interface is configured to receive a cut-off electricity quantity that is for reverse charging on the second electronic device and that is input by the user. As shown in FIG. 13, when it is determined that the first electronic device charges the second electronic device, the first electronic device may display a second interface including "set a cut-off electricity quantity for external charging", a cut-off electricity quantity input box, and "OK". When the user inputs the cut-off electricity quantity for reverse charging on the second electronic device on the second interface, the first electronic device may obtain the cut-off electricity quantity for reverse charging on the second electronic device, for example, a cut-off electricity quantity 35% shown in FIG. 13.

It may be understood that the user may input the cut-off electricity quantity in the cut-off electricity quantity input box on the second interface shown in FIG. 13, or select the cut-off electricity quantity by using the cut-off electricity quantity input box, or select the cut-off electricity quantity from a plurality of preset cut-off electricity quantities. A manner of setting the cut-off electricity quantity is not specifically limited in this embodiment of this application.

S1104: The first electronic device controls a boost circuit by using a first SOC to boost a first battery voltage of the first electronic device to a first voltage value, and outputs the first voltage value to a buck circuit of the second electronic device.

For a corresponding circuit used when the boost circuit boosts the first battery voltage of the first electronic device to the first voltage value, refer to FIG. 4-FIG. 6. For example, a circuit in FIG. 4-FIG. 6 specifically used to perform reverse charging may be determined based on a temperature, a battery capacity, a remaining electricity quantity, and the like of the electronic device.

S1105: The second electronic device controls the buck circuit by using a second SOC to adjust the first voltage value to the second battery voltage, and uses the second battery voltage to charge the second electronic device.

For a corresponding circuit used when the buck circuit adjusts the first voltage value to the second battery voltage of the second electronic device, refer to FIG. 4-FIG. 6. For example, a circuit in FIG. 4-FIG. 6 specifically used to perform reverse charging may be determined based on a temperature, a battery capacity, a remaining electricity quantity, and the like of the electronic device.

S1106: When a remaining electricity quantity of the first electronic device meets a first condition, or a remaining electricity quantity of the second electronic device meets a second condition, or the second battery voltage of the second electronic device meets a third condition, the first electronic device stops charging the second electronic device.

For example, the first condition may be a cut-off electricity quantity of the first electronic device. As shown in FIG. 13, the cut-off electricity quantity of the first electronic device is 35%. When the first electronic device charges the second electronic device and the remaining electricity quantity of the first electronic device reaches 35%, the first electronic device stops charging the second electronic device. In this way, the first electronic device can ensure an electricity quantity required for running of the first electronic device while performing reverse charging on the second electronic device, improving user experience.

For example, the second condition may be a cut-off electricity quantity of the second electronic device, and the cut-off electricity quantity of the second electronic device may also be set based on the interface shown in FIG. 13. For example, a current remaining electricity quantity of the second electronic device is 10%. The user sets a charging cut-off voltage of the second electronic device to 60% on the interface shown in FIG. 13. To be specific, when the first electronic device charges the second electronic device and the remaining electricity quantity of the second electronic device reaches 60%, the first electronic device stops charging the second electronic device.

For example, the third condition may be a cut-off voltage of the second electronic device. When the first electronic device charges the second electronic device and the second battery voltage of the second electronic device reaches the cut-off voltage, the first electronic device stops charging the second electronic device.

In conclusion, when the first electronic device performs reverse charging on the second electronic device, the second electronic device can use the second battery voltage to charge a battery of the second electronic device, improving reverse charging efficiency.

To further improve user experience during reverse charging, when the first electronic device is wiredly connected to the second electronic device, the first electronic device and the second electronic device may determine, based on conditions such as a temperature of the first electronic device, a temperature of the second electronic device, a battery capacity of the first electronic device, and a battery capacity of the second electronic device, a boost circuit used by the first electronic device 200 and a buck circuit used by the second electronic device, that is, determine which reverse charging circuit in the foregoing FIG. 4-FIG. 6 is used. The following describes corresponding reverse charging circuits in different conditions.

That a reverse charging circuit is determined based on a temperature of the electronic device is described in the following.

In a possible implementation, the first electronic device and the second electronic device may determine the reverse charging circuit based on the temperature of the first electronic device. When the temperature of the first electronic device is higher than a first temperature threshold and lower than a second temperature threshold, the reverse charging circuit shown in FIG. 4 may be used to perform reverse charging. For a process of performing reverse charging by using the reverse charging circuit shown in FIG. 4, refer to the foregoing embodiment. Details are not described in this embodiment. In this way, a temperature increase speed of the first electronic device in a reverse charging process can be slowed down, improving user experience, and also improving reverse charging efficiency.

It may be understood that, for normal running of the first electronic device, a temperature range between the first temperature threshold and the second temperature threshold may be a temperature range in which the electronic device can stably run. For example, the first temperature threshold may be 20 degrees Celsius, and the second temperature threshold may be 40 degrees Celsius. To be specific, when the temperature of the first electronic device is between 20 degrees Celsius and 40 degrees Celsius, reverse charging is performed by using the reverse charging circuit shown in FIG. 4.

For example, if the temperature of the first electronic device is higher than the first temperature threshold and lower than the second temperature threshold, there is no SC charger in the first electronic device, and the second electronic device has an SC charger, charging may be performed by using the reverse charging circuit shown in FIG. 5. If neither the first electronic device nor the second electronic device has an SC charger, charging may be performed by using the reverse charging circuit shown in FIG. 6.

In a possible implementation, when the temperature of the first electronic device is lower than the first temperature threshold or the temperature of the first electronic device is higher than the second temperature threshold, reverse charging may be performed by using hardware in reverse charging shown in FIG. 6. However, in a reverse charging process, the first electronic device may control the boost boost circuit by using the first SOC to boost the first battery voltage of the first electronic device to a specified voltage value, and use the specified voltage value to perform reverse charging on the second electronic device. The second electronic device controls the buck circuit by using the second SOC to adjust the specified voltage value to the second battery voltage of the second electronic device. The specified voltage value is a minimum charging voltage value allowed by the second electronic device.

In this way, when the temperature of the first electronic device is relatively low or relatively high, the first electronic device uses a first preset value to perform reverse charging on the second electronic device, so that power of reverse charging is relatively low, and safety in a charging process is relatively high.

In this embodiment of this application, the temperature of the first electronic device and the temperature of the second electronic device can affect selection of the reverse charging circuit. For example, when a temperature is between 100°C-150°C, a reverse charging circuit with a relatively low power is used. To be specific, the first electronic device may boost the first battery voltage of the first electronic device to a first preset voltage value by using the boost boost circuit, and use the first preset voltage value to perform reverse charging on the second electronic device. The second electronic device adjusts the first preset voltage value to the second battery voltage of the second electronic device by using the buck circuit 304. When a temperature sum is between 50°C-100°C, a reverse charging circuit with a relatively high power is used, and any one of the charging solutions shown in FIG. 4-FIG. 6 may be selected.

In a possible implementation, the first electronic device and the second electronic device may determine the reverse charging circuit based on the first value of the first electronic device and the second value of the second electronic device. When the first value is greater than the second value, the first value is greater than a preset value, and the second value is less than the preset value, the reverse charging circuit shown in FIG. 4 may be used to perform reverse charging. For a process of performing reverse charging by using the reverse charging circuit shown in FIG. 4, refer to the foregoing embodiment. Details are not described in this embodiment. In this way, a temperature increase speed of the first electronic device in a reverse charging process can be relatively slow, improving user experience, and also improving reverse charging efficiency.

For example, the preset value is 2000 mA, the battery capacity of the first electronic device is 8000 mA, a first remaining electricity quantity of the first electronic device is 40%, the battery capacity of the second electronic device is 5000 mA, and a second remaining electricity quantity of the second electronic device is 50%. It may be learned that the first value is 3200 mA, and the second value is 2500 mA. In this case, the reverse charging circuit shown in FIG. 4 is used by the first electronic device to charge the second electronic device.

For example, the first electronic device may obtain the first battery capacity by using a coulometer of the first electronic device, and the second electronic device may obtain the second battery capacity by using a coulometer of the second electronic device. The coulometer can monitor charging and discharging of a battery, and can provide a real-time and real battery capacity.

It may be understood that the preset value is related to the battery capacity of the first electronic device and/or the second electronic device. For example, the preset value may be 50% of the battery capacity of the first electronic device, so that when the first value of the first electronic device is relatively large, the second electronic device can be quickly and efficiently charged. Alternatively, the preset value may be 55% of the battery capacity of the second electronic device, or the preset value may be an average value of the battery capacity of the first electronic device and the battery capacity of the second electronic device.

For example, if the first value is greater than the second value, the first value is greater than a preset value, the second value is less than the preset value, and there is no SC charger in the first electronic device, and the second electronic device has an SC charger, charging may be performed by using the reverse charging circuit shown in FIG. 5. If neither the first electronic device nor the second electronic device has an SC charger, charging may be performed by using the reverse charging circuit shown in FIG. 6.

In a possible implementation, when the first value and the second value meet a preset condition, reverse charging is performed by using hardware in reverse charging shown in FIG. 6. However, in a reverse charging process, the first electronic device may control the boost boost circuit by using the first SOC to boost the first battery voltage of the first electronic device to a specified voltage value, and use the specified voltage value to perform reverse charging on the second electronic device. The second electronic device controls the buck circuit by using the second SOC to adjust the specified voltage value to the second battery voltage of the second electronic device, and uses the second battery voltage to implement charging. The preset condition includes any one of the following: The first value is less than the second value, both the first value and the second value are less than the preset value, and both the first value and the second value are greater than the preset value.

For example, the preset value is 45% of the battery capacity of the first electronic device. When the battery capacity of the first electronic device is the same as the battery capacity of the second electronic device, and the first remaining electricity quantity of the first electronic device is 20%, and the second remaining electricity quantity of the second electronic device is 40%, or both the first remaining electricity quantity and the second remaining electricity quantity are 20%, or both the first remaining electricity quantity and the second remaining electricity quantity are 60%, the first electronic device uses the boost boost circuit to boost the first battery voltage to the specified voltage value, and the second electronic device adjusts the specified voltage value to the second battery voltage of the second electronic device by using the buck circuit.

In this way, the electronic device is enabled to run, improving user experience.

In this embodiment of this application, when the first electronic device performs reverse charging on the second electronic device, a difference between the first value and the second value, or a difference between the first remaining electricity quantity and the second remaining electricity quantity may affect a selected reverse charging circuit.

For example, when the difference between the first value and the second value is greater than a first preset difference, or the difference between the first remaining electricity quantity and the second remaining electricity quantity is greater than a second preset difference, a reverse charging circuit with relatively high power may be used to perform reverse charging. For example, any one of that in FIG. 4-FIG. 6 is used. On the contrary, a reverse charging circuit with relatively low power is used to perform reverse charging. The first electronic device may boost the first battery voltage of the first electronic device to the specified voltage value by using the boost boost circuit, and use the specified voltage value to perform reverse charging on the second electronic device. The second electronic device adjusts the specified voltage value to the second battery voltage of the second electronic device by using the buck circuit, and uses the second battery voltage to implement charging.

In a possible implementation, when the first remaining electricity quantity of the first electronic device is greater than the second remaining electricity quantity of the second electronic device, the first electronic device may perform reverse charging by using the reverse charging circuit shown in FIG. 4.

In this embodiment of this application, the reverse charging circuit determined based on the temperature may be different from the reverse charging circuit determined based on a product of the battery capacity and the remaining electricity quantity. To improve user experience, a boost circuit and a buck circuit determined based on the temperature are preferred, so that safety of reverse charging is relatively high.

In a possible implementation, when the temperature of the first electronic device is lower than the first temperature threshold or the temperature of the first electronic device is higher than the second temperature threshold, and the first value is greater than the second value, based on a temperature priority principle, the hardware in reverse charging shown in FIG. 6 may be used to perform reverse charging. However, in a reverse charging process, the first electronic device may control the boost boost circuit by using the first SOC to boost the first battery voltage of the first electronic device to a specified voltage value, and use the specified voltage value to perform reverse charging on the second electronic device. The second electronic device controls the buck circuit by using the second SOC to adjust the specified voltage value to the second battery voltage of the second electronic device, and uses the second battery voltage to implement charging.

In this embodiment of this application, in a process of reverse charging performed by the first electronic device on the second electronic device, the first electronic device and the second electronic device may switch a used reverse charging circuit based on changes of the temperature and the remaining electricity quantity, to improve user experience.

In a possible implementation, in a reverse charging process, when the temperature of the second electronic device is higher than the second temperature threshold, and the first electronic device boosts the first battery voltage of the first electronic device to X times the first battery voltage by using a charging chip of a first SC charger, the first electronic device may switch to control the boost boost circuit by using the first SOC to boost the first battery voltage of the first electronic device to Y times the second battery voltage, and use the Y times the second battery voltage to perform reverse charging on the second electronic device. The second electronic device may switch to control a second SC charger by using the second SOC to adjust the Y times the second battery voltage to the second battery voltage of the second electronic device, and use the second battery voltage to implement charging, where X is a positive integer greater than 1, and Y is a positive integer greater than 1.

For example, when there is no second SC charger in the second electronic device, it may be switched to use the hardware in reverse charging shown in FIG. 6 to perform reverse charging. However, in a reverse charging process, the first electronic device may control the boost boost circuit by using the first SOC to boost the first battery voltage of the first electronic device to a specified voltage value, and use the specified voltage value to perform reverse charging on the second electronic device. The second electronic device controls the buck circuit by using the second SOC to adjust the specified voltage value to the second battery voltage of the second electronic device. The specified voltage value is a minimum charging voltage value allowed by the second electronic device. In this way, power of reverse charging can be reduced, the battery of the second electronic device can be protected, and user experience can be improved.

It may be understood that when the temperature of the second electronic device falls above the first temperature threshold and below the second temperature threshold, the first electronic device may switch back to a previously used boost circuit, and the second electronic device may switch back to a previously used buck circuit.

In a possible implementation, the electronic device may further switch, based on a current electricity quantity consumption situation of the first electronic device, a boost circuit used by the first electronic device and a buck circuit used by the second electronic device in a reverse charging circuit. In a reverse charging process, when the first electronic device is running an application with relatively large electricity quantity consumption, for example, a game, or a video shooting application, and the first electronic device boosts the first battery voltage of the first electronic device to the X times the first battery voltage by using the first SC charger, it may be switched to use the hardware in reverse charging shown in FIG. 6 to perform reverse charging. However, in the reverse charging process, the first electronic device may control the boost boost circuit by using the first SOC to boost the first battery voltage of the first electronic device to a specified voltage value, and use the specified voltage value to perform reverse charging on the second electronic device. The second electronic device controls the buck circuit by using the second SOC to adjust the specified voltage value to the second battery voltage of the second electronic device. The specified voltage value is a minimum charging voltage value allowed by the second electronic device. In this way, power of reverse charging can be reduced, so that the first electronic device can stably run a currently running application, improving user experience.

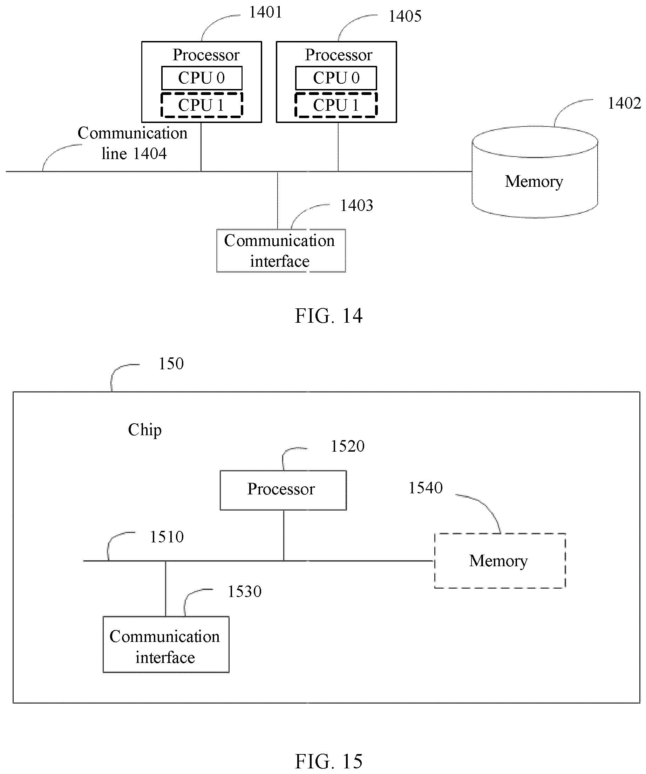

For example, FIG. 14 is a schematic diagram of a hardware structure of an electronic device according to an embodiment of this application. As shown in FIG. 14, the electronic device includes a processor 1401, a communication line 1404, and at least one communication interface (in FIG. 14, for example, a communication interface 1403 is used as an example for description).

The processor 1401 may be a general-purpose central processing unit (central processing unit, CPU), a microprocessor, an application-specific integrated circuit (application-specific integrated circuit, ASIC), or one or more integrated circuits for controlling program execution in the solutions in this application.

The communication line 1404 may include a circuit for transmitting information between the foregoing components.

The communication interface 1403 uses any apparatus such as a transceiver to communicate with another device or a communication network, such as an Ethernet or a wireless local area network (wireless local area networks, WLAN).

Possibly, the electronic device may further include a memory 1402.

The memory 1402 may be a read-only memory (read-only memory, ROM) or another type of static storage device capable of storing static information and instructions, a random access memory (random access memory, RAM) or another type of dynamic storage device capable of storing information and instructions, or an electrically erasable programmable read-only memory (electrically erasable programmable read-only memory, EEPROM), a compact disc read-only memory (compact disc read-only memory, CD-ROM) or another optical disc memory, a compact disc memory (including a compact disc, a laser disc, an optical disc, a digital versatile disc, a Blu-ray disc, and the like), a magnetic disk storage medium or another magnetic storage device, or any other medium that can be used to carry or store desired program code in a form of instructions or data structures and that can be accessed by a computer, but is not limited thereto. The memory may exist independently, and is connected to the processor by using the communication line 1404. The memory may alternatively be integrated with the processor.

The memory 1402 is configured to store computer-executable instructions for performing the solution in this application, and the processor 1401 controls execution. The processor 1401 is configured to execute the computer-executable instructions stored in the memory 1402, to implement the steps performed by the first electronic device in the method provided in the embodiments of this application, or implement the steps performed by the second electronic device in the method provided in the embodiments of this application.

Possibly, the computer-executable instructions in this embodiment of this application may also be referred to as application program code. This is not specifically limited in the embodiments of this application.

During a specific implementation, in an embodiment, the processor 1401 may include one or more CPUs, for example, a CPU 0 and a CPU 1 in FIG. 14.

During a specific implementation, in an embodiment, the electronic device may include a plurality of processors, for example, a processor 1401 and a processor 1405 in FIG. 14. Each of these processors may be a single-core (single-CPU) processor or a multi-core (multi-CPU) processor. The processor herein may be one or more devices, circuits, and/or processing cores configured to process data (for example, computer program instructions).

For example, FIG. 15 is a schematic diagram of a structure of a chip according to an embodiment of this application. A chip 1500 includes one or more than two (including two) processors 1520 and a communication interface 1530.

In some implementations, a memory 1540 stores the following elements: an executable module or a data structure, or subsets thereof, or extended sets thereof.

In this embodiment of this application, the memory 1540 may include a read-only memory and a random access memory, and provide instructions and data to the processor 1520. A part of the memory 1540 may further include a non-volatile random access memory (non-volatile random access memory, NVRAM).

In this embodiment of this application, the memory 1540, the communication interface 1530, and the processor 1520 are coupled together by using a bus system 1510. The bus system 1510 may further include a power bus, a control bus, a status signal bus, and the like in addition to a data bus. For convenience of description, various buses are marked as the bus system 1510 in FIG. 15.

The method described in the embodiments of this application may be applied to the processor 1520 or implemented by the processor 1520. The processor 1520 may be an integrated circuit chip having a capability of processing a signal. During an implementation, the steps of the method may be performed by using an integrated logic circuit of hardware in the processor 1520 or by using instructions in a form of software. The processor 1520 may be a general-purpose processor (for example, a microprocessor or a conventional processor), a digital signal processor (digital signal processing, DSP), an application-specific integrated circuit (application specific integrated circuit, ASIC), a field-programmable gate array (field-programmable gate array, FPGA) or another programmable logic device, a discrete gate, or a transistor logic device or a discrete hardware component. The processor 1520 may implement or perform the methods, steps, and logical block diagrams disclosed in the embodiments of this application.

The steps of the method disclosed in the embodiments of this application may be directly performed by a hardware decoding processor, or performed by a combination of hardware and a software module in a decoding processor. The software module may be located in a mature storage medium in the art, for example, a random access memory, a read-only memory, a programmable read-only memory, or an electrically erasable programmable memory (electrically erasable programmable read only memory, EEPROM). The storage medium is located in the memory 1540, and the processor 1520 reads information in the memory 1540 and completes the steps of the foregoing method in combination with hardware in the processor.

In the foregoing embodiments, the instructions stored in the memory for execution by the processor may be implemented in a form of a computer program product. The computer program product may be pre-written in the memory, or may be downloaded and installed in the memory in a form of software.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any available medium that the computer can store, or a data storage device such as a server or a data center integrating one or more available media. For example, the available medium may include a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

An embodiment of this application further provides a computer-readable storage medium. The method described in the foregoing embodiments may be completely or partially implemented by using software, hardware, firmware, or any combination thereof. The computer-readable medium may include a computer storage medium and a communication medium, and may further include any medium that enables a computer program to be transmitted from one place to another place. The storage medium may be any target medium accessible by the computer.

In a possible design, the computer-readable medium may include a compact disc read-only memory (compact disc read-only memory, CD-ROM), a RAM, a ROM, an EEPROM, or another optical disc memory; or the computer-readable medium may include a magnetic disk memory or another magnetic disk storage device. In addition, any connecting line may also be appropriately referred to as a computer-readable medium. For example, if software is transmitted from a website, a server, or another remote source by using a coaxial cable, an optical fiber cable, a twisted pair, a DSL, or wireless technologies (for example, infrared, radio, and microwave), the coaxial cable, the optical fiber cable, the twisted pair, the DSL, or the wireless technologies such as infrared, radio, and microwave are included in the definition of the medium. As used herein, a magnetic disk and an optical disc include a compact disc (CD), a laser disc, an optical disc, a digital versatile disc (digital versatile disc, DVD), a floppy disk, and a Blu-ray disc. The magnetic disk usually reproduces data in a magnetic manner, and the optical disc reproduces data optically by using laser.

The foregoing combinations should also be included in the scope of the computer-readable medium. The foregoing descriptions are merely specific implementations of the present invention. However, the protection scope of the present invention is not limited thereto. Any change or replacement readily figured out by a person skilled in the art within the technical scope disclosed in the present invention shall fall within the protection scope of the present invention. Therefore, the protection scope of the present invention shall be subject to the protection scope of the claims.

## Claims

1. A reverse charging system, wherein the charging system comprises a first electronic device (200) and a second electronic device (300);
the first electronic device is configured to boost a first battery voltage of the first electronic device to a first voltage value, and then use the first voltage value to perform reverse charging on the second electronic device; and
the second electronic device is configured to adjust the first voltage value to a second battery voltage of the second electronic device, and use the second battery voltage to implement charging, wherein the first battery voltage of the first electronic device decreases as power supply duration of the first electronic device increases, and the second battery voltage of the second electronic device increases as charging duration of the second electronic device increases, and
wherein the first electronic device comprises a boost circuit, the first voltage value is a specified voltage value, and the specified voltage value is a minimum charging voltage value allowed by the second electronic device; and
the first electronic device is specifically configured to: when a first value and a second value meet a preset condition, boost the first battery voltage of the first electronic device to the specified voltage value by using the boost circuit, and use the specified voltage value to perform reverse charging on the second electronic device; and the first value is a product of a first battery capacity of the first electronic device and a first remaining electricity quantity of the first electronic device, the second value is a product of a second battery capacity of the second electronic device and a second remaining electricity quantity of the second electronic device, and the preset condition comprises any one of the following: the first value is less than the second value, both the first value and the second value are less than a preset value, and both the first value and the second value are greater than the preset value.

2. The reverse charging system according to claim 1, wherein the first electronic device further comprises a first charging chip, the second electronic device comprises a buck circuit, and the first voltage value is X times the first battery voltage of the first electronic device, wherein X is a positive integer greater than 1;
the first charging chip is configured to boost the first battery voltage of the first electronic device to the X times the first battery voltage; and
the buck circuit is configured to adjust the X times the first battery voltage to the second battery voltage of the second electronic device.

3. The reverse charging system according to claim 2, wherein the first electronic device is specifically configured to: when a temperature of the first electronic device is higher than a first temperature threshold and lower than a second temperature threshold, boost the first battery voltage of the first electronic device to the X times the first battery voltage by using the first charging chip, and use the X times the first battery voltage to perform reverse charging on the second electronic device; and the first temperature threshold is less than the second temperature threshold.

4. The reverse charging system according to claim 1, wherein the second electronic device further comprises a second charging chip, and the first voltage value is Y times the second battery voltage of the second electronic device, wherein Y is a positive integer greater than 1;
the first electronic device is specifically configured to: when a temperature of the second electronic device is higher than the second temperature threshold, and the first electronic device boosts the first battery voltage of the first electronic device to the X times the first battery voltage by using the first charging chip, switch to boost the first battery voltage of the first electronic device to the Y times the second battery voltage by using the boost circuit, and use the Y times the second battery voltage to perform reverse charging on the second electronic device; and
the second electronic device is specifically configured to: when the temperature of the second electronic device is higher than the second temperature threshold, and the second electronic device bucks the X times the first battery voltage to the second battery voltage of the second electronic device by using the buck circuit, switch to adjust the Y times the second battery voltage to the second battery voltage of the second electronic device by using the second charging chip, and use the second battery voltage to implement charging.

5. The reverse charging system according to claim 3, wherein the first electronic device is specifically configured to: when the temperature of the first electronic device is lower than the first temperature threshold or the temperature of the first electronic device is higher than the second temperature threshold, and the first electronic device boosts the first battery voltage of the first electronic device to the X times the first battery voltage by using the first charging chip, switch to boost the first battery voltage of the first electronic device to the specified voltage value by using the boost circuit, and use the specified voltage value to perform reverse charging on the second electronic device.

6. The reverse charging system according to claim 2, wherein the first electronic device is specifically configured to: when a first value is greater than a second value, boost the first battery voltage of the first electronic device to the X times the first battery voltage by using the first charging chip, and use the X times the first battery voltage to perform reverse charging on the second electronic device; and the first value is greater than a preset value, and the second value is less than the preset value.

7. The reverse charging system according to claim 1, wherein the first electronic device is specifically configured to: when a temperature of the first electronic device is lower than a first temperature threshold or the temperature of the first electronic device is higher than a second temperature threshold, and a first value is greater than a second value, boost the first battery voltage of the first electronic device to the specified voltage value by using the boost circuit, and use the specified voltage value to perform reverse charging on the second electronic device; the first temperature threshold is less than the second temperature threshold; and the first value is greater than a preset value, and the second value is less than the preset value.

8. The reverse charging system according to claim 1, wherein the second electronic device comprises a second charging chip, and the first voltage value is Y times the second battery voltage of the second electronic device, wherein Y is a positive integer greater than 1;
the boost circuit is configured to boost the first battery voltage of the first electronic device to the Y times the second battery voltage; and
the second charging chip is configured to adjust the Y times the second battery voltage to the second battery voltage of the second electronic device.

9. The reverse charging system according to claim 1, wherein the second electronic device comprises a buck circuit, and the first voltage value is a voltage value that is in a preset voltage value and that has a smallest difference from a voltage upper limit value of the second electronic device;
the boost circuit is configured to boost the first battery voltage of the first electronic device to the voltage value that is in the preset voltage value and that has the smallest difference from the voltage upper limit value of the second electronic device; and
the buck circuit is configured to adjust, to the second battery voltage of the second electronic device, the voltage value that is in the preset voltage value and that has the smallest difference from the voltage upper limit value of the second electronic device.

10. The reverse charging system according to any one of claims 1-9, wherein the first electronic device is further configured to: when the first electronic device is wiredly connected to the second electronic device, perform reverse charging on the second electronic device if the first battery capacity of the first electronic device is greater than the second battery capacity of the second electronic device, or the first value of the first electronic device is greater than the second value of the second electronic device.

11. The reverse charging system according to any one of claims 1-9, wherein the first electronic device is further configured to: when the first electronic device is wiredly connected to the second electronic device, display a first interface, wherein the first interface comprises prompt information used to prompt whether to use the first electronic device for external charging, and a first button and a second button, and when an operation for the first button is received, use the first voltage value to perform reverse charging on the second electronic device, or when an operation for the second button is received, accept charging from the second electronic device.

12. The reverse charging system according to any one of claims 1-11, wherein the first electronic device is further configured to: display a second interface, and when a user inputs a cut-off electricity quantity for reverse charging on the second electronic device on the second interface, obtain the cut-off electricity quantity for reverse charging on the second electronic device; and the second interface is configured to receive the cut-off electricity quantity that is for reverse charging on the second electronic device and that is input by the user; and
the first electronic device is further configured to: when the first remaining electricity quantity of the first electronic device reaches the cut-off electricity quantity, stop performing reverse charging on the second electronic device.

13. A reverse charging method, comprising:
boosting, by a first electronic device (200), a first battery voltage of the first electronic device to a first voltage value, and then using the first voltage value to perform reverse charging on a second electronic device; and
adjusting, by the second electronic device (300), the first voltage value to a second battery voltage of the second electronic device, and using the second battery voltage to implement charging, wherein the first battery voltage of the first electronic device decreases as power supply duration of the first electronic device increases, and the second battery voltage of the second electronic device increases as charging duration of the second electronic device increases; and
the first voltage value is X times the first battery voltage of the first electronic device, wherein X is a positive integer greater than 1; and the first electronic device comprises a first charging chip, and the second electronic device comprises a buck circuit;
the boosting, by a first electronic device, a first battery voltage of the first electronic device to a first voltage value comprises:
boosting, by the first electronic device, the first battery voltage of the first electronic device to the X times the first battery voltage by using the first charging chip; and
the adjusting, by the second electronic device, the first voltage value to a second battery voltage of the second electronic device comprises:
adjusting, by the second electronic device, the X times the first battery voltage to the second battery voltage of the second electronic device by using the buck circuit, and
wherein the boosting, by a first electronic device, a first battery voltage of the first electronic device to a first voltage value, and then using the first voltage value to perform reverse charging on the second electronic device comprises:
when a temperature of the first electronic device is higher than a first temperature threshold and lower than a second temperature threshold, boosting, by the first electronic device, the first battery voltage of the first electronic device to the X times the first battery voltage by using the first charging chip, and using the X times the first battery voltage to perform reverse charging on the second electronic device, wherein the first temperature threshold is less than the second temperature threshold; and
the first electronic device further comprises a boost circuit, the first voltage value is a specified voltage value, and the specified voltage value is a minimum charging voltage value allowed by the second electronic device; and
the boosting, by a first electronic device, a first battery voltage of the first electronic device to a first voltage value, and then using the first voltage value to perform reverse charging on the second electronic device comprises:
when the temperature of the first electronic device is lower than the first temperature threshold or the temperature of the first electronic device is higher than the second temperature threshold, and the first electronic device boosts the first battery voltage of the first electronic device to the X times the first battery voltage by using the first charging chip, switching, by the first electronic device, to boost the first battery voltage of the first electronic device to the specified voltage value by using the boost circuit, and using the specified voltage value to perform reverse charging on the second electronic device.

## Patentansprüche

1. Ein Rückwärtsladesystem, wobei das Ladesystem eine erste elektronische Vorrichtung (200) und eine zweite elektronische Vorrichtung (300) umfasst;
die erste elektronische Vorrichtung ist dazu konfiguriert, eine erste Batteriespannung der ersten elektronischen Vorrichtung auf einen ersten Spannungswert zu erhöhen und dann den ersten Spannungswert zu verwenden, um ein Rückwärtsladen der zweiten elektronischen Vorrichtung durchzuführen; und
die zweite elektronische Vorrichtung ist dazu konfiguriert, den ersten Spannungswert auf eine zweite Batteriespannung der zweiten elektronischen Vorrichtung anzupassen und die zweite Batteriespannung zu verwenden, um ein Laden zu implementieren, wobei die erste Batteriespannung der ersten elektronischen Vorrichtung abnimmt, wenn die Stromversorgungsdauer der ersten elektronischen Vorrichtung zunimmt, und die zweite Batteriespannung der zweiten elektronischen Vorrichtung zunimmt, wenn die Ladedauer der zweiten elektronischen Vorrichtung zunimmt, und
wobei die erste elektronische Vorrichtung eine Aufwärtswandlerschaltung umfasst, der erste Spannungswert ein spezifizierter Spannungswert ist und der spezifizierte Spannungswert ein minimaler, von der zweiten elektronischen Vorrichtung zugelassener Ladespannungswert ist; und
die erste elektronische Vorrichtung ist spezifisch dazu konfiguriert: wenn ein erster Wert und ein zweiter Wert eine voreingestellte Bedingung erfüllen, die erste Batteriespannung der ersten elektronischen Vorrichtung unter Verwendung der Aufwärtswandlerschaltung auf den spezifizierten Spannungswert zu erhöhen und den spezifizierten Spannungswert zu verwenden, um ein Rückwärtsladen der zweiten elektronischen Vorrichtung durchzuführen; und der erste Wert ist ein Produkt aus einer ersten Batteriekapazität der ersten elektronischen Vorrichtung und einer ersten verbleibenden Strommenge der ersten elektronischen Vorrichtung, der zweite Wert ist ein Produkt aus einer zweiten Batteriekapazität der zweiten elektronischen Vorrichtung und einer zweiten verbleibenden Strommenge der zweiten elektronischen Vorrichtung, und die voreingestellte Bedingung umfasst eine der folgenden: der erste Wert ist kleiner als der zweite Wert, sowohl der erste Wert als auch der zweite Wert sind kleiner als ein voreingestellter Wert, und sowohl der erste Wert als auch der zweite Wert sind größer als der voreingestellte Wert.

2. Rückwärtsladesystem nach Anspruch 1, wobei die erste elektronische Vorrichtung ferner einen ersten Ladechip umfasst, die zweite elektronische Vorrichtung eine Abwärtswandlerschaltung umfasst und der erste Spannungswert das X-fache der ersten Batteriespannung der ersten elektronischen Vorrichtung beträgt, wobei X eine positive ganze Zahl größer als 1 ist;
der erste Ladechip ist dazu konfiguriert, die erste Batteriespannung der ersten elektronischen Vorrichtung auf das X-fache der ersten Batteriespannung zu erhöhen; und
die Abwärtswandlerschaltung ist dazu konfiguriert, das X-fache der ersten Batteriespannung auf die zweite Batteriespannung der zweiten elektronischen Vorrichtung anzupassen.

3. Das Umkehrladesystem nach Anspruch 2, wobei die erste elektronische Vorrichtung speziell dazu konfiguriert ist: wenn eine Temperatur der ersten elektronischen Vorrichtung höher als ein erster Temperaturschwellenwert und niedriger als ein zweiter Temperaturschwellenwert ist, die erste Batteriespannung der ersten elektronischen Vorrichtung unter Verwendung des ersten Ladechips auf das X-fache der ersten Batteriespannung hochzusetzen und das X-fache der ersten Batteriespannung zu verwenden, um eine Umkehrladung an der zweiten elektronischen Vorrichtung durchzuführen; und wobei der erste Temperaturschwellenwert kleiner als der zweite Temperaturschwellenwert ist.

4. Das Umkehrladesystem nach Anspruch 1, wobei die zweite elektronische Vorrichtung ferner einen zweiten Ladechip umfasst und der erste Spannungswert das Y-fache der zweiten Batteriespannung der zweiten elektronischen Vorrichtung ist, wobei Y eine positive ganze Zahl größer als 1 ist;
die erste elektronische Vorrichtung speziell dazu konfiguriert ist: wenn eine Temperatur der zweiten elektronischen Vorrichtung höher als der zweite Temperaturschwellenwert ist und die erste elektronische Vorrichtung die erste Batteriespannung der ersten elektronischen Vorrichtung unter Verwendung des ersten Ladechips auf das X-fache der ersten Batteriespannung hochsetzt, auf ein Hochsetzen der ersten Batteriespannung der ersten elektronischen Vorrichtung auf das Y-fache der zweiten Batteriespannung unter Verwendung der Aufwärtswandlerschaltung umzuschalten und das Y-fache der zweiten Batteriespannung zu verwenden, um eine Umkehrladung an der zweiten elektronischen Vorrichtung durchzuführen; und
die zweite elektronische Vorrichtung speziell dazu konfiguriert ist: wenn die Temperatur der zweiten elektronischen Vorrichtung höher als der zweite Temperaturschwellenwert ist und die zweite elektronische Vorrichtung das X-fache der ersten Batteriespannung unter Verwendung der Abwärtswandlerschaltung auf die zweite Batteriespannung der zweiten elektronischen Vorrichtung heruntersetzt, auf eine Anpassung des Y-fachen der zweiten Batteriespannung auf die zweite Batteriespannung der zweiten elektronischen Vorrichtung unter Verwendung des zweiten Ladechips umzuschalten und die zweite Batteriespannung zu verwenden, um den Ladevorgang zu implementieren.

5. Das Umkehrladesystem nach Anspruch 3, wobei die erste elektronische Vorrichtung speziell dazu konfiguriert ist: wenn die Temperatur der ersten elektronischen Vorrichtung niedriger als der erste Temperaturschwellenwert ist oder die Temperatur der ersten elektronischen Vorrichtung höher als der zweite Temperaturschwellenwert ist und die erste elektronische Vorrichtung die erste Batteriespannung der ersten elektronischen Vorrichtung unter Verwendung des ersten Ladechips auf das X-fache der ersten Batteriespannung hochsetzt, auf ein Hochsetzen der ersten Batteriespannung der ersten elektronischen Vorrichtung auf den spezifizierten Spannungswert unter Verwendung der Aufwärtswandlerschaltung umzuschalten und den spezifizierten Spannungswert zu verwenden, um eine Umkehrladung an der zweiten elektronischen Vorrichtung durchzuführen.

6. Rückwärtsladesystem nach Anspruch 2, wobei die erste elektronische Vorrichtung speziell dazu konfiguriert ist: wenn ein erster Wert größer als ein zweiter Wert ist, die erste Batteriespannung der ersten elektronischen Vorrichtung unter Verwendung des ersten Ladechips auf das X-fache der ersten Batteriespannung zu erhöhen und das X-fache der ersten Batteriespannung zu verwenden, um eine Rückwärtsladung der zweiten elektronischen Vorrichtung durchzuführen; und der erste Wert größer als ein voreingestellter Wert ist und der zweite Wert kleiner als der voreingestellte Wert ist.

7. Rückwärtsladesystem nach Anspruch 1, wobei die erste elektronische Vorrichtung speziell dazu konfiguriert ist: wenn eine Temperatur der ersten elektronischen Vorrichtung niedriger als ein erster Temperaturschwellenwert ist oder die Temperatur der ersten elektronischen Vorrichtung höher als ein zweiter Temperaturschwellenwert ist und ein erster Wert größer als ein zweiter Wert ist, die erste Batteriespannung der ersten elektronischen Vorrichtung unter Verwendung der Aufwärtswandlerschaltung auf den spezifizierten Spannungswert zu erhöhen und den spezifizierten Spannungswert zu verwenden, um eine Rückwärtsladung der zweiten elektronischen Vorrichtung durchzuführen; wobei der erste Temperaturschwellenwert kleiner als der zweite Temperaturschwellenwert ist; und der erste Wert größer als ein voreingestellter Wert ist und der zweite Wert kleiner als der voreingestellte Wert ist.

8. Rückwärtsladesystem nach Anspruch 1, wobei die zweite elektronische Vorrichtung einen zweiten Ladechip umfasst und der erste Spannungswert das Y-fache der zweiten Batteriespannung der zweiten elektronischen Vorrichtung beträgt, wobei Y eine positive ganze Zahl größer als 1 ist;
die Aufwärtswandlerschaltung dazu konfiguriert ist, die erste Batteriespannung der ersten elektronischen Vorrichtung auf das Y-fache der zweiten Batteriespannung zu erhöhen; und
der zweite Ladechip dazu konfiguriert ist, das Y-fache der zweiten Batteriespannung auf die zweite Batteriespannung der zweiten elektronischen Vorrichtung anzupassen.

9. Rückwärtsladesystem nach Anspruch 1, wobei die zweite elektronische Vorrichtung eine Abwärtswandlerschaltung umfasst und der erste Spannungswert ein Spannungswert ist, der in einem voreingestellten Spannungswertbereich liegt und die geringste Differenz zu einem oberen Spannungsgrenzwert der zweiten elektronischen Vorrichtung aufweist;
die Aufwärtswandlerschaltung dazu konfiguriert ist, die erste Batteriespannung der ersten elektronischen Vorrichtung auf den Spannungswert zu erhöhen, der in dem voreingestellten Spannungswertbereich liegt und die geringste Differenz zu dem oberen Spannungsgrenzwert der zweiten elektronischen Vorrichtung aufweist; und
die Abwärtswandlerschaltung dazu konfiguriert ist, den Spannungswert, der in dem voreingestellten Spannungswertbereich liegt und die geringste Differenz zu dem oberen Spannungsgrenzwert der zweiten elektronischen Vorrichtung aufweist, auf die zweite Batteriespannung der zweiten elektronischen Vorrichtung anzupassen.

10. Das Umkehrladesystem nach einem der Ansprüche 1-9, wobei die erste elektronische Vorrichtung ferner dazu konfiguriert ist: wenn die erste elektronische Vorrichtung kabelgebunden mit der zweiten elektronischen Vorrichtung verbunden ist, eine Umkehrladung der zweiten elektronischen Vorrichtung durchzuführen, wenn die erste Batteriekapazität der ersten elektronischen Vorrichtung größer als die zweite Batteriekapazität der zweiten elektronischen Vorrichtung ist oder der erste Wert der ersten elektronischen Vorrichtung größer als der zweite Wert der zweiten elektronischen Vorrichtung ist.

11. Das Umkehrladesystem nach einem der Ansprüche 1-9, wobei die erste elektronische Vorrichtung ferner dazu konfiguriert ist: wenn die erste elektronische Vorrichtung kabelgebunden mit der zweiten elektronischen Vorrichtung verbunden ist, eine erste Schnittstelle anzuzeigen, wobei die erste Schnittstelle Aufforderungsinformationen umfasst, die dazu dienen, dazu aufzufordern, ob die erste elektronische Vorrichtung für externes Laden verwendet werden soll, sowie eine erste Schaltfläche und eine zweite Schaltfläche, und wenn eine Betätigung für die erste Schaltfläche empfangen wird, den ersten Spannungswert zu verwenden, um eine Umkehrladung der zweiten elektronischen Vorrichtung durchzuführen, oder wenn eine Betätigung für die zweite Schaltfläche empfangen wird, das Laden von der zweiten elektronischen Vorrichtung zu akzeptieren.

12. Das Umkehrladesystem nach einem der Ansprüche 1-11, wobei die erste elektronische Vorrichtung ferner dazu konfiguriert ist: eine zweite Schnittstelle anzuzeigen, und wenn ein Benutzer eine Abschalt-Elektrizitätsmenge für das Umkehrladen der zweiten elektronischen Vorrichtung auf der zweiten Schnittstelle eingibt, die Abschalt-Elektrizitätsmenge für das Umkehrladen der zweiten elektronischen Vorrichtung zu erhalten; und die zweite Schnittstelle dazu konfiguriert ist, die Abschalt-Elektrizitätsmenge zu empfangen, die für das Umkehrladen der zweiten elektronischen Vorrichtung bestimmt ist und die vom Benutzer eingegeben wird; und
die erste elektronische Vorrichtung ferner dazu konfiguriert ist: wenn die erste verbleibende Elektrizitätsmenge der ersten elektronischen Vorrichtung die Abschalt-Elektrizitätsmenge erreicht, das Durchführen des Umkehrladens der zweiten elektronischen Vorrichtung zu stoppen.

13. Ein Umkehrladeverfahren, umfassend:
das Hochtransformieren, durch eine erste elektronische Vorrichtung (200), einer ersten Batteriespannung der ersten elektronischen Vorrichtung auf einen ersten Spannungswert, und dann das Verwenden des ersten Spannungswerts, um eine Umkehrladung einer zweiten elektronischen Vorrichtung durchzuführen; und
das Anpassen, durch die zweite elektronische Vorrichtung (300), des ersten Spannungswerts auf eine zweite Batteriespannung der zweiten elektronischen Vorrichtung, und das Verwenden der zweiten Batteriespannung, um das Laden zu implementieren, wobei die erste Batteriespannung der ersten elektronischen Vorrichtung abnimmt, wenn die Stromversorgungsdauer der ersten elektronischen Vorrichtung zunimmt, und die zweite Batteriespannung der zweiten elektronischen Vorrichtung zunimmt, wenn die Ladedauer der zweiten elektronischen Vorrichtung zunimmt; und
Der erste Spannungswert entspricht dem X-Fachen der ersten Batteriespannung des ersten elektronischen Geräts, wobei X eine positive Ganzzahl größer als 1 ist; und das erste elektronische Gerät umfasst einen ersten Ladechip, und das zweite elektronische Gerät umfasst einen Abwärtswandler-Schaltkreis (Buck-Schaltung);
Das Erhöhen einer ersten Batteriespannung des ersten elektronischen Geräts auf einen ersten Spannungswert durch ein erstes elektronisches Gerät umfasst:
das Erhöhen der ersten Batteriespannung des ersten elektronischen Geräts auf das X-Fache der ersten Batteriespannung durch das erste elektronische Gerät unter Verwendung des ersten Ladechips; und
das Anpassen des ersten Spannungswerts auf eine zweite Batteriespannung des zweiten elektronischen Geräts durch das zweite elektronische Gerät umfasst:
das Anpassen des X-Fachen der ersten Batteriespannung auf die zweite Batteriespannung des zweiten elektronischen Geräts durch das zweite elektronische Gerät unter Verwendung des Abwärtswandler-Schaltkreises, und
wobei das Erhöhen einer ersten Batteriespannung des ersten elektronischen Geräts auf einen ersten Spannungswert durch ein erstes elektronisches Gerät und das anschließende Verwenden des ersten Spannungswerts zur Durchführung einer Rückwärtsladung des zweiten elektronischen Geräts umfasst:
wenn eine Temperatur des ersten elektronischen Geräts höher als ein erster Temperaturschwellenwert und niedriger als ein zweiter Temperaturschwellenwert ist, das Erhöhen der ersten Batteriespannung des ersten elektronischen Geräts auf das X-Fache der ersten Batteriespannung durch das erste elektronische Gerät unter Verwendung des ersten Ladechips, und das Verwenden des X-Fachen der ersten Batteriespannung zur Durchführung der Rückwärtsladung des zweiten elektronischen Geräts, wobei der erste Temperaturschwellenwert kleiner als der zweite Temperaturschwellenwert ist; und
das erste elektronische Gerät umfasst ferner einen Aufwärtswandler-Schaltkreis, wobei der erste Spannungswert ein spezifizierter Spannungswert ist und der spezifizierte Spannungswert ein durch das zweite elektronische Gerät zulässiger minimaler Ladespannungswert ist; und
das Erhöhen einer ersten Batteriespannung des ersten elektronischen Geräts auf einen ersten Spannungswert durch ein erstes elektronisches Gerät und das anschließende Verwenden des ersten Spannungswerts zur Durchführung der Rückwärtsladung des zweiten elektronischen Geräts umfasst:
wenn die Temperatur des ersten elektronischen Geräts niedriger als der erste Temperaturschwellenwert oder die Temperatur des ersten elektronischen Geräts höher als der zweite Temperaturschwellenwert ist und das erste elektronische Gerät die erste Batteriespannung des ersten elektronischen Geräts unter Verwendung des ersten Ladechips auf das X-Fache der ersten Batteriespannung erhöht, das Umschalten durch das erste elektronische Gerät, um die erste Batteriespannung des ersten elektronischen Geräts unter Verwendung des Aufwärtswandler-Schaltkreises auf den spezifizierten Spannungswert zu erhöhen und den spezifizierten Spannungswert zur Durchführung der Rückwärtsladung des zweiten elektronischen Geräts zu verwenden.

## Revendications

1. Système de charge inversée, dans lequel le système de charge comprend un premier dispositif électronique (200) et un second dispositif électronique (300) ;
le premier dispositif électronique est configuré pour augmenter une première tension de batterie du premier dispositif électronique à une première valeur de tension, puis pour utiliser la première valeur de tension afin d'effectuer une charge inversée sur le second dispositif électronique ; et
le second dispositif électronique est configuré pour ajuster la première valeur de tension à une seconde tension de batterie du second dispositif électronique, et pour utiliser la seconde tension de batterie afin de mettre en œuvre la charge, dans lequel la première tension de batterie du premier dispositif électronique diminue à mesure que la durée d'alimentation électrique du premier dispositif électronique augmente, et la seconde tension de batterie du second dispositif électronique augmente à mesure que la durée de charge du second dispositif électronique augmente, et
dans lequel le premier dispositif électronique comprend un circuit élévateur, la première valeur de tension est une valeur de tension spécifiée, et la valeur de tension spécifiée est une valeur de tension de charge minimale autorisée par le second dispositif électronique ; et
le premier dispositif électronique est spécifiquement configuré pour : lorsqu'une première valeur et une seconde valeur remplissent une condition prédéfinie, augmenter la première tension de batterie du premier dispositif électronique à la valeur de tension spécifiée en utilisant le circuit élévateur, et utiliser la valeur de tension spécifiée pour effectuer une charge inversée sur le second dispositif électronique ; et la première valeur est un produit d'une première capacité de batterie du premier dispositif électronique et d'une première quantité d'électricité restante du premier dispositif électronique, la seconde valeur est un produit d'une seconde capacité de batterie du second dispositif électronique et d'une seconde quantité d'électricité restante du second dispositif électronique, et la condition prédéfinie comprend l'une quelconque des conditions suivantes : la première valeur est inférieure à la seconde valeur, la première valeur et la seconde valeur sont toutes deux inférieures à une valeur prédéfinie, et la première valeur et la seconde valeur sont toutes deux supérieures à la valeur prédéfinie.

2. Système de charge inversée selon la revendication 1, dans lequel le premier dispositif électronique comprend en outre une première puce de charge, le second dispositif électronique comprend un circuit abaisseur, et la première valeur de tension est X fois la première tension de batterie du premier dispositif électronique, où X est un entier positif supérieur à 1 ;
la première puce de charge est configurée pour augmenter la première tension de batterie du premier dispositif électronique à X fois la première tension de batterie ; et
le circuit abaisseur est configuré pour ajuster les X fois la première tension de batterie à la seconde tension de batterie du second dispositif électronique.

3. Système de charge inversée selon la revendication 2, dans lequel le premier dispositif électronique est spécifiquement configuré pour : lorsqu'une température du premier dispositif électronique est supérieure à un premier seuil de température et inférieure à un second seuil de température, amplifier la première tension de batterie du premier dispositif électronique à X fois la première tension de batterie en utilisant la première puce de charge, et utiliser X fois la première tension de batterie pour effectuer une charge inversée sur le second dispositif électronique ; et le premier seuil de température est inférieur au second seuil de température.

4. Système de charge inversée selon la revendication 1, dans lequel le second dispositif électronique comprend en outre une seconde puce de charge, et la première valeur de tension est Y fois la seconde tension de batterie du second dispositif électronique, où Y est un nombre entier positif supérieur à 1 ;
le premier dispositif électronique est spécifiquement configuré pour : lorsqu'une température du second dispositif électronique est supérieure au second seuil de température, et que le premier dispositif électronique amplifie la première tension de batterie du premier dispositif électronique à X fois la première tension de batterie en utilisant la première puce de charge, passer à l'amplification de la première tension de batterie du premier dispositif électronique à Y fois la seconde tension de batterie en utilisant le circuit d'amplification, et utiliser Y fois la seconde tension de batterie pour effectuer une charge inversée sur le second dispositif électronique ; et
le second dispositif électronique est spécifiquement configuré pour : lorsque la température du second dispositif électronique est supérieure au second seuil de température, et que le second dispositif électronique abaisse X fois la première tension de batterie à la seconde tension de batterie du second dispositif électronique en utilisant le circuit d'abaissement, passer à l'ajustement de Y fois la seconde tension de batterie à la seconde tension de batterie du second dispositif électronique en utilisant la seconde puce de charge, et utiliser la seconde tension de batterie pour mettre en œuvre la charge.

5. Système de charge inversée selon la revendication 3, dans lequel le premier dispositif électronique est spécifiquement configuré pour : lorsque la température du premier dispositif électronique est inférieure au premier seuil de température ou que la température du premier dispositif électronique est supérieure au second seuil de température, et que le premier dispositif électronique amplifie la première tension de batterie du premier dispositif électronique à X fois la première tension de batterie en utilisant la première puce de charge, passer à l'amplification de la première tension de batterie du premier dispositif électronique à la valeur de tension spécifiée en utilisant le circuit d'amplification, et utiliser la valeur de tension spécifiée pour effectuer une charge inversée sur le second dispositif électronique.

6. Le système de charge inversée selon la revendication 2, dans lequel le premier dispositif électronique est spécifiquement configuré pour : lorsqu'une première valeur est supérieure à une deuxième valeur, augmenter la première tension de batterie du premier dispositif électronique à X fois la première tension de batterie en utilisant la première puce de charge, et utiliser les X fois la première tension de batterie pour effectuer une charge inversée sur le deuxième dispositif électronique ; et la première valeur est supérieure à une valeur prédéfinie, et la deuxième valeur est inférieure à la valeur prédéfinie.

7. Le système de charge inversée selon la revendication 1, dans lequel le premier dispositif électronique est spécifiquement configuré pour : lorsqu'une température du premier dispositif électronique est inférieure à un premier seuil de température ou que la température du premier dispositif électronique est supérieure à un deuxième seuil de température, et qu'une première valeur est supérieure à une deuxième valeur, augmenter la première tension de batterie du premier dispositif électronique à la valeur de tension spécifiée en utilisant le circuit élévateur, et utiliser la valeur de tension spécifiée pour effectuer une charge inversée sur le deuxième dispositif électronique ; le premier seuil de température est inférieur au deuxième seuil de température ; et la première valeur est supérieure à une valeur prédéfinie, et la deuxième valeur est inférieure à la valeur prédéfinie.

8. Le système de charge inversée selon la revendication 1, dans lequel le deuxième dispositif électronique comprend une deuxième puce de charge, et la première valeur de tension est Y fois la deuxième tension de batterie du deuxième dispositif électronique, où Y est un entier positif supérieur à 1 ;
le circuit élévateur est configuré pour augmenter la première tension de batterie du premier dispositif électronique à Y fois la deuxième tension de batterie ; et
la deuxième puce de charge est configurée pour ajuster les Y fois la deuxième tension de batterie à la deuxième tension de batterie du deuxième dispositif électronique.

9. Le système de charge inversée selon la revendication 1, dans lequel le deuxième dispositif électronique comprend un circuit abaisseur, et la première valeur de tension est une valeur de tension qui est dans une valeur de tension prédéfinie et qui présente la plus petite différence par rapport à une valeur limite supérieure de tension du deuxième dispositif électronique ;
le circuit élévateur est configuré pour augmenter la première tension de batterie du premier dispositif électronique à la valeur de tension qui est dans la valeur de tension prédéfinie et qui présente la plus petite différence par rapport à la valeur limite supérieure de tension du deuxième dispositif électronique ; et
le circuit abaisseur est configuré pour ajuster, à la deuxième tension de batterie du deuxième dispositif électronique, la valeur de tension qui est dans la valeur de tension prédéfinie et qui présente la plus petite différence par rapport à la valeur limite supérieure de tension du deuxième dispositif électronique.

10. Le système de charge inversée selon l'une quelconque des revendications 1 à 9, dans lequel le premier dispositif électronique est en outre configuré pour : lorsque le premier dispositif électronique est connecté par câble au second dispositif électronique, effectuer une charge inversée sur le second dispositif électronique si la première capacité de batterie du premier dispositif électronique est supérieure à la seconde capacité de batterie du second dispositif électronique, ou si la première valeur du premier dispositif électronique est supérieure à la seconde valeur du second dispositif électronique.

11. Le système de charge inversée selon l'une quelconque des revendications 1 à 9, dans lequel le premier dispositif électronique est en outre configuré pour : lorsque le premier dispositif électronique est connecté par câble au second dispositif électronique, afficher une première interface, dans laquelle la première interface comprend des informations d'invite utilisées pour demander s'il faut utiliser le premier dispositif électronique pour une charge externe, ainsi qu'un premier bouton et un second bouton, et lorsqu'une opération sur le premier bouton est reçue, utiliser la première valeur de tension pour effectuer une charge inversée sur le second dispositif électronique, ou lorsqu'une opération sur le second bouton est reçue, accepter la charge provenant du second dispositif électronique.

12. Le système de charge inversée selon l'une quelconque des revendications 1 à 11, dans lequel le premier dispositif électronique est en outre configuré pour : afficher une seconde interface, et lorsqu'un utilisateur saisit une quantité d'électricité seuil pour la charge inversée sur le second dispositif électronique via la seconde interface, obtenir la quantité d'électricité seuil pour la charge inversée sur le second dispositif électronique ; et la seconde interface est configurée pour recevoir la quantité d'électricité seuil qui est destinée à la charge inversée sur le second dispositif électronique et qui est saisie par l'utilisateur ; et
le premier dispositif électronique est en outre configuré pour : lorsque la première quantité d'électricité restante du premier dispositif électronique atteint la quantité d'électricité seuil, arrêter d'effectuer la charge inversée sur le second dispositif électronique.

13. Un procédé de charge inversée, comprenant :
l'augmentation, par un premier dispositif électronique (200), d'une première tension de batterie du premier dispositif électronique jusqu'à une première valeur de tension, puis l'utilisation de la première valeur de tension pour effectuer une charge inversée sur un second dispositif électronique ; et
l'ajustement, par le second dispositif électronique (300), de la première valeur de tension à une seconde tension de batterie du second dispositif électronique, et l'utilisation de la seconde tension de batterie pour mettre en œuvre la charge, dans lequel la première tension de batterie du premier dispositif électronique diminue à mesure que la durée d'alimentation électrique du premier dispositif électronique augmente, et la seconde tension de batterie du second dispositif électronique augmente à mesure que la durée de charge du second dispositif électronique augmente ; et
la première valeur de tension est X fois la première tension de batterie du premier appareil électronique, où X est un entier positif supérieur à 1 ; et le premier appareil électronique comprend une première puce de charge, et le second appareil électronique comprend un circuit abaisseur (buck circuit) ;
l'élévation, par un premier appareil électronique, d'une première tension de batterie du premier appareil électronique vers une première valeur de tension comprend :
l'élévation, par le premier appareil électronique, de la première tension de batterie du premier appareil électronique à X fois la première tension de batterie en utilisant la première puce de charge ; et
l'ajustement, par le second appareil électronique, de la première valeur de tension vers une seconde tension de batterie du second appareil électronique comprend :
l'ajustement, par le second appareil électronique, de X fois la première tension de batterie vers la seconde tension de batterie du second appareil électronique en utilisant le circuit abaisseur, et
où l'élévation, par un premier appareil électronique, d'une première tension de batterie du premier appareil électronique vers une première valeur de tension, puis l'utilisation de la première valeur de tension pour effectuer une charge inversée sur le second appareil électronique comprend :
lorsqu'une température du premier appareil électronique est supérieure à un premier seuil de température et inférieure à un second seuil de température, l'élévation, par le premier appareil électronique, de la première tension de batterie du premier appareil électronique à X fois la première tension de batterie en utilisant la première puce de charge, et l'utilisation de X fois la première tension de batterie pour effectuer une charge inversée sur le second appareil électronique, où le premier seuil de température est inférieur au second seuil de température ; et
le premier appareil électronique comprend en outre un circuit élévateur (boost circuit), la première valeur de tension est une valeur de tension spécifiée, et la valeur de tension spécifiée est une valeur de tension de charge minimale autorisée par le second appareil électronique ; et
l'élévation, par un premier appareil électronique, d'une première tension de batterie du premier appareil électronique vers une première valeur de tension, puis l'utilisation de la première valeur de tension pour effectuer une charge inversée sur le second appareil électronique comprend :
lorsque la température du premier appareil électronique est inférieure au premier seuil de température ou que la température du premier appareil électronique est supérieure au second seuil de température, et que le premier appareil électronique élève la première tension de batterie du premier appareil électronique à X fois la première tension de batterie en utilisant la première puce de charge, la commutation, par le premier appareil électronique, pour élever la première tension de batterie du premier appareil électronique vers la valeur de tension spécifiée en utilisant le circuit élévateur, et l'utilisation de la valeur de tension spécifiée pour effectuer une charge inversée sur le second appareil électronique.
